# EUROPEAN PATENT SPECIFICATION

(11) **EP 4 268 423 B1**
(45) Date of publication and mention of the grant of the patent: **18.09.2024**
(21) Application number: 21704060.9
(22) Date of filing: 11.01.2021
(51) Int. Cl.: H04L 9/40, H04L 65/40

(54) **TECHNIQUES FOR AUTO-REMEDIATING SECURITY ISSUES WITH ARTIFICIAL INTELLIGENCE**
VERFAHREN ZUR AUTOMATISCHEN SANIERUNG VON SICHERHEITSPROBLEMEN MIT KÜNSTLICHER INTELLIGENZ
TECHNIQUES D'AUTO-REMÉDIATION DE PROBLÈMES DE SÉCURITÉ À L'AIDE D'UNE INTELLIGENCE ARTIFICIELLE

(30) Priority: 22.12.2020 US 202017130867
(43) Date of publication of application: 01.11.2023
(73) Proprietor: Oracle International Corporation, Redwood Shores, CA 94065 (US)
(72) Inventor: KUPERMAN, Leonid, Redwood Shores, California 94065 (US); UPPALAPATI, Ramakrishna Raju, Redwood Shores, California 94065 (US); YAMUNA, Prakash, Redwood Shores, California 94065 (US); MODI, Vardhaman Parasmal, Redwood Shores, California 94065 (US); BAIG, Mukarram, Redwood Shores, California 94065 (US); SRIVASTAVA, Rohit, Redwood Shores, California 94065 (US)
(74) Representative: Gill Jennings & Every LLP
(86) International application number: PCT/US2021/012890
(87) International publication number: WO 2022/139858

(56) References cited:
- US-A1- 2020 252 802
- US-B1- 10 491 617
- NESPOLI PANTALEONE ET AL: "Optimal Countermeasures Selection Against Cyber Attacks: A Comprehensive Survey on Reaction Frameworks", IEEE COMMUNICATIONS SURVEYS & TUTORIALS, vol. 20, no. 2, 22 May 2018 (2018-05-22), pages 1361 - 1396, XP011684272, DOI: 10.1109/COMST.2017.2781126

## Description

### CROSS-REFERENCE TO RELATED APPLICATIONS

This application claims the benefit and priority of U.S. Patent Application No. 17/130,867 filed December 22, 2020, entitled "TECHNIQUES FOR AUTO-REMEDIATING SECURITY ISSUES WITH ARTIFICIAL INTELLIGENCE".

### FIELD OF THE INVENTION

The present disclosure relates generally to cybersecurity, and more particularly, to techniques for auto-remediating security issues with artificial intelligence.

### BACKGROUND

Security information and event management (SIEM) is a subsection within the field of cybersecurity, where software solutions and tools combine security information management (SIM) and security event management (SEM). These software solutions and tools provide real-time analysis of security notification generated by applications and network hardware. SIEM software works by collecting log and event data that is generated by host systems, security devices and applications throughout an organization's infrastructure and collating log and event data on a centralized platform. The SIEM software solutions and tools identify within this data (e.g., antivirus events and firewall logs) various activities based on classification rules, and sorts the activities into categories, such as malware activity, failed and successful logins and other potentially malicious activity. When the software identifies activity that could signify a threat to the organization, notifications are generated to indicate a potential security issue. These notifications can be set at various levels of priority using a set of pre-defined rules. For example, if a user account generates multiple failed login attempts over a given period of time, this could be flagged as suspicious activity, but set at a lower priority as it is most likely to be a user that has forgotten their login details. However, if an account experiences a large amount of failed login attempts over a short given period of time this is more likely to be a brute-force attack in progress and flagged as a high severity incident.

While the SIEM software solutions and tools aggregate relevant data from multiple sources and this data collection is meaningful, these processes within SIEM tend to produce more notifications than security teams can expect to respond to while still remaining effective. To assist the security teams with these tasks, a collection of software solutions and tools referred to as SOAR (Security Orchestration, Automation, and Response) allows security teams to manage threats and vulnerabilities and respond to incidents or security events. The orchestration component provides coordination between the various software solutions and tools to seamlessly integrate and communicate with each other to establish repeatable, enforceable, measurable, and effective incident response processes and workflows. The automation component semiautomatically handles linear bases tasks and processes using a rule or policy based system to reduce or eliminate the mundane actions that must be performed. The response component addresses and manages the security incident once a notification has been confirmed, including triage, containment, remediation, formalized workflow, reporting and collaboration. Accordingly, taking advantage of the SIEMs ability to ingest large volumes of data and to generate the notifications, the SOAR solution can be used to augment the SIEM solution in order to better manage the incident response process to each notification, automating and orchestrating the mundane and repetitive tasks which would otherwise take the security team hours to complete.

US 10 491 617 B1 describes a machine learning-based system and method for identifying digital threats that includes implementing a machine learning-based digital threat mitigation service over a distributed network of computers; constructing, by the machine learning-based digital threat mitigation service, a subscriber-specific machine learning ensemble that includes a plurality of distinct machine learning models, wherein each of the plurality of distinct machine learning models is configured to perform a distinct machine learning task for identifying a digital threat or digital fraud; constructing a corpus of subscriber-specific digital activity data for training the plurality of distinct machine learning models of the subscriber-specific ensemble; training the subscriber-specific ensemble using at least the corpus of subscriber-specific digital activity data; and deploying the subscriber-specific ensemble.

### BRIEF SUMMARY

The present invention is defined by the features disclosed in the independent claims. Additional embodiments are defined in the dependent claims. Techniques are provided (e.g., a method, a system, non-transitory computer-readable medium storing code or instructions executable by one or more processors) for auto-remediating security issues with artificial intelligence.

In various embodiments, a method is provided that comprises: obtaining, by a response system of a security architecture, a problem detected within a signal from an emitter associated with a user; inferring a first response, using a global model implemented as part of the response system that takes as input the problem, where the global model comprises a global set of model parameters learned from mappings between problems and responses globally with respect to preferences of all users using the security architecture; inferring a second response, using a local model implemented as part of the response system that takes as input the problem, where the local model comprises a local set of model parameters learned from mappings between problems and responses locally with respect to preferences of the user; evaluating, by the response system, the first response and the second response using criteria comprising: (i) a confidence score associated with each of the first response and the second response, and (ii) a weight associated with each of the global model and the local model; determining, by the response system, a final response for the problem based on the evaluation of the first response and the second response; and selecting, by the response system, a responder from a set of responders based on the final response, where the responder is adapted to take one or more actions to respond to the problem.

In some embodiments, the method further comprises: prior to selecting the responder, evaluating, using the response system, the final response for accuracy, where the accuracy is evaluated based on a comparison between the final response and a groundtruth response that the user would prefer for the problem, and the accuracy of the final response is determined to be acceptable when the final response aligns with the groundtruth response based on the comparison or is determined to be unacceptable when the final response does not align with the groundtruth response based on the comparison; responsive to the accuracy being determined to be unacceptable: generating a label for the problem, where the label comprises the groundtruth response; storing the label comprising the ground truth and the problem in a local data store; and selecting the responder from the set of responders based on the groundtruth rather than the final response; and responsive to the accuracy being determined to be acceptable: generating a label for the problem, where the label comprises the final response; storing the label comprising the final response and the problem in the local data store and the global data store; and selecting the responder from the set of responders based on the final response.

In some embodiments, the method further comprises: responsive to the accuracy being determined to be unacceptable: storing the label comprising the ground truth and problem in a general data store or placing the label comprising the ground truth and the problem in a data queue for evaluation by an administrator; receiving a response from the administrator to either take no action with the respect to the label comprising the ground truth and the problem or to train the global model using the label comprising the ground truth and the problem; responsive to response being to take no action, removing the label comprising the ground truth and the problem from the data store or the data queue; and responsive to the response being to train the global model, storing the label comprising the ground truth and the problem in the global repository.

In some embodiments, the method further comprises: training the global model with global training data from the global repository, where the global training data includes the label comprising the final response and the problem; and training the local model with local training data from the local repository, where the local training data includes the label comprising the final response and the problem.

In some embodiments, the method further comprises: training the local model with local training data from the local repository, where the local training data includes the label comprising the groundtruth response and the problem.

In some embodiments, the method further comprises: raining the global model with global training data from the global repository, where the global training data includes the label comprising the groundtruth response and the problem; and training the local model with local training data from the local repository, where the local training data includes the label comprising the groundtruth response and the problem.

In some embodiments, the method further comprises: performing, by the response system, the one or more actions to respond to the problem.

### BRIEF DESCRIPTION OF THE DRAWINGS

FIG. 1 depicts a block diagram illustrating a computing system for generating notifications of potential security problems and auto-remediating the security problems with artificial intelligence in accordance with various embodiments.
FIG. 2 depicts a block diagram illustrating a response system with active-learning in accordance with various embodiments.
FIG. 3 depicts a flowchart illustrating a process for auto-remediating security problems with artificial intelligence in accordance with various embodiments.
FIG. 4 depicts a flowchart illustrating a process for auto-remediating security problems with two or more prediction models implemented with active-learning in accordance with various embodiments.
FIG. 5 depicts a block diagram illustrating one pattern for implementing a cloud infrastructure as a service system in accordance with various embodiments.
FIG. 6 depicts a block diagram illustrating another pattern for implementing a cloud infrastructure as a service system in accordance with various embodiments.
FIG. 7 depicts a block diagram illustrating another pattern for implementing a cloud infrastructure as a service system in accordance with various embodiments.
FIG. 8 depicts a block diagram illustrating another pattern for implementing a cloud infrastructure as a service system in accordance with various embodiments.
FIG. 9 depicts a block diagram illustrating an example computer system in accordance with various embodiments.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

### Introduction

In various embodiments, a security architecture comprised of a SOAR solution layered on top of a SIEM solution is provided as a standalone system that helps customers maintain a strong security posture within a distributed computing environment such as within cloud computing. Customers use the security architecture to monitor their tenancy and determine if distributed computing environment resources are in a state of weakened security, or if the resources under attack. Upon detection, the security architecture takes corrective action. In many ways, SOAR solutions are a natural complement to SIEM solutions. SIEMs are effective at aggregating security data from across a network, but usually lack features that allow them to provide context to all that data. The result is that SIEM users still have to spend a lot of time performing manual triage and research a task that is becoming increasingly difficult in the face of countless alerts and floods of data. Reducing the amount of manual work needed requires orchestration and automation, and SOAR solutions are able to gather together threat data and then automate repeatable incident response tasks, taking the burden away from personnel. But for SOAR solutions to work effectively, they need rules or policies that are repeatable, automated security workflows designed to describe threats and how to handle them. The problem is, these rules or policies are only as good as the data used to construct them and humans are still required to orchestrate the overall remediation of the threats and how to handle them. Additionally like SIEMs, SOARs can suffer from problems like an overload of data, a lack of context from internal systems, and a limited view of external threats.

To overcome these challenges and others, various embodiments are directed to a security architecture with a SOAR solution that can be used to auto-remediate security incidents with artificial intelligence. A security incident (referred to herein as simply a "problem") is a possible security event that the security architecture is adapted to respond to and remediate. Problems are derived from a collection of signals. The same signal repeated over time can indicate a single problem or multiple signals may be indicative of the same problem. "Alice's user credentials have been compromised" is an example of a problem. In various embodiments, a technique implemented by the security architecture for auto-remediating security problems includes: obtaining, by a response system of a security architecture, a problem detected within a signal from an emitter associated with a user; inferring a first response, using a global model implemented as part of the response system that takes as input the problem, where the global model comprises a global set of model parameters learned from mappings between problems and responses globally with respect to preferences of all users using the security architecture; inferring a second response, using a local model implemented as part of the response system that takes as input the problem, where the local model comprises a local set of model parameters learned from mappings between problems and responses locally with respect to preferences of the user; evaluating, by the response system, the first response and the second response using criteria comprising: (i) a confidence score associated with each of the first response and the second response, and (ii) a weight associated with each of the global model and the local model; determining, by the response system, a final response for the problem based on the evaluation of the first response and the second response; and selecting, by the response system, a responder from a set of responders based on the final response, where the responder is adapted to take one or more actions to respond to the problem.

In some instances, the technique implemented by the security architecture for auto-remediating security problems further comprises active learning, which includes: prior to selecting the responder, evaluating, using the response system, the final response for accuracy, where the accuracy is evaluated based on a comparison between the final response and a groundtruth response that the user would prefer for the problem, and the accuracy of the final response is determined to be acceptable when the final response aligns with the groundtruth response based on the comparison or is determined to be unacceptable when the final response does not align with the groundtruth response based on the comparison.

Responsive to the accuracy being determined to be unacceptable: generating a label for the problem, where the label comprises the groundtruth response; storing the label comprising the ground truth and the problem in a local data store; selecting the responder from the set of responders based on the groundtruth rather than the final response; and training the local model with local training data from the local repository, where the local training data includes the label comprising the groundtruth and the problem.

Further responsive to the accuracy being determined to be unacceptable: storing the label comprising the ground truth and problem in a general data store or placing the label comprising the ground truth and the problem in a data queue for evaluation by an administrator; receiving a response from the administrator to either take no action with the respect to the label comprising the ground truth and the problem or to train the global model using the label comprising the ground truth and the problem; responsive to response being to take no action, removing the label comprising the ground truth and the problem from the data store or the data queue; and responsive to the response being to train the global model, storing the label comprising the ground truth and the problem in the global repository and thereafter training the global model with global training data from the global repository, where the global training data includes the label comprising the groundtruth and the problem.

Responsive to the accuracy being determined to be acceptable: generating a label for the problem, where the label comprises the final response; storing the label comprising the final response and the problem in the local data store and the global data store; selecting the responder from the set of responders based on the final response, training the global model with global training data from the global repository, where the global training data includes the label comprising the final response and the problem, and training the local model with local training data from the local repository, where the local training data includes the label comprising the final response and the problem.

### Security Architecture with Active Learning

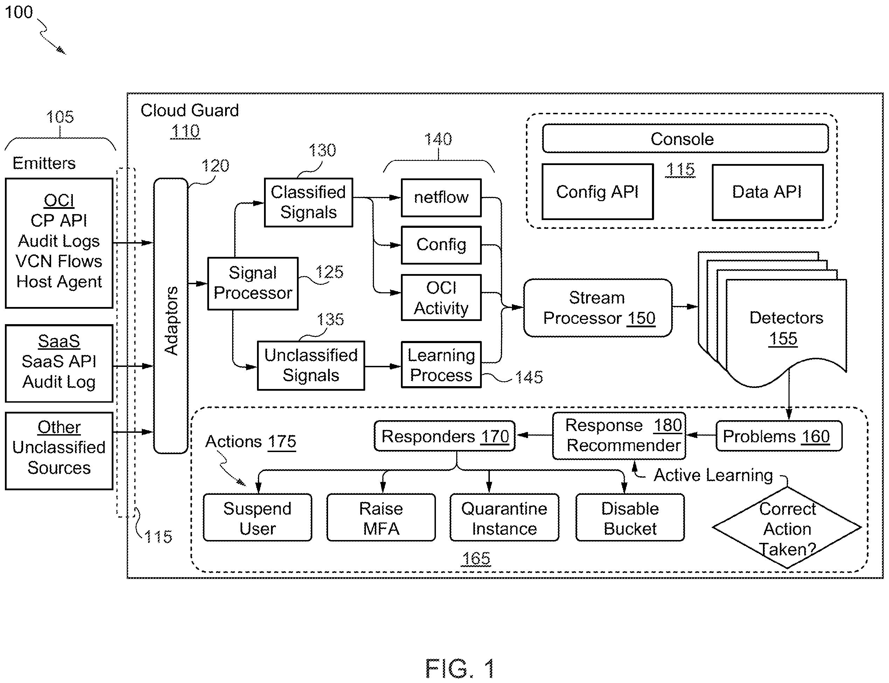

FIG. 1 is a block diagram illustrating a computing system 100 for generating notifications of potential security problems and auto-remediating the security problems with artificial intelligence in accordance with various embodiments. As shown in FIG. 1, the computing system 100 comprises one or more emitters 105 and a security architecture 110 comprised of a SOAR solution layered on top of a SIEM solution. Computing system 100 may be computerized such that each of the illustrated components is configured to communicate with other components. In instances in which components reside on a same computing device the communication may be via an internal communication system such as various types of buses. In instances in which components reside on different computing devices such as different servers the communication may be via a network 115. Network 115 may be any type of network familiar to those skilled in the art that can support data communications using any of a variety of commercially-available protocols, including without limitation TCP/IP, SNA, IPX, AppleTalk, and the like. Merely by way of example, network 115 can be a local area network (LAN) such as an Ethernet network, a Token-Ring network and/or the like, a wide-area network (WAN), a virtual network, including without limitation a virtual private network (VPN), the Internet, an intranet, an extranet, a public switched telephone network (PSTN), an infra-red network, a wireless network (e.g., a network operating under any of the IEEE 802.1X suite of protocols, the Bluetooth protocol known in the art, and/or any other wireless protocol), and/or any combination of these and/or other networks. Any other combination of networks, including secured and unsecured network communications are contemplated for use in the systems described herein. Although exemplary computing system 100 is shown with three emitters 105 and one security architecture 110, any number of emitters 105 and/or security architecture 110 may be supported, in other embodiments (e.g., a separate security architecture may reside on each distributed computing environment such as cloud computing environment).

The emitters 105 are generators of raw data (sources of data). Examples include an Operating System Management Service, Oracle Cloud Infrastructure (OCI) Audit Service, Agent running on a Virtual Machine (VM), raw Simple Network Management Protocol (SNMP) and/or OCI Flow Logs. The security architecture 110 uses adapters 120 (data transformers) to consume and convert the raw data generated by the emitters 105 to a signal communicated via an internal application programming interface (API) signal call to the signal processor 125. A signal is a raw data point for security architectures 110. Signals may be classified or unclassified. A classified signal is a raw data point from a well understood source, with a known schema. The security architectures 110 may convert classified signals to strongly typed internal JSON objects that capture "who, what, when, and where?" Examples include configuration change signals (e.g. an Object Storage bucket was made public), principal activity signals (e.g. "user Alice logged in from Thailand"), network signals, and Common Vulnerabilities and Exposures (CVE) signals (a CVE is a type of vulnerability that is publicly known and classified). An unclassified signal is a raw data point, or a set of raw data points from a poorly understood source. The source may be one that Cloud Guard has not seen previously. For example, a customer application log may be the source of unclassified signals. The security architecture 110 may attempt to infer "who, what, when, and where?" as well as normal vs. abnormal signal patterns. The security architecture 110 may attempt to learn what unclassified signals are and may ask for customer input to help the learning process. In some instances, the adapters 120 obtain the raw data via external API through polling of the emitters 105. In other instances, the emitters 105 push the raw data to the adapters 120. In some instances, the adapters 120 are used to integrate with and obtain raw data from third-party vendors like McAfee, Qualys, Rapid?, etc.

The signal processor 125 consumes signal data and signal hint information from adaptors to determine if an incoming signal is a classified signal 130 or an unclassified signal 135. The determination of a classified signal 130 versus an unclassified signal 135 may be made based on the signal hint. As used herein, when an action is "based on" something, this means the action is based at least in part on at least a part of the something. A signal hint is a suggestion for the type of signal being considered and is usually provided by the adaptors 120. A signal hint is similar to an SQL Query hint, or HTML Meta tags such as "keywords" and "description". A signal hint tells the signal processor 125 which type of signal an adaptor 120 believes is being processed. The signal processor 125 is under no obligation to use the hint. Based on the type of signal determined, the signal processor 125 routes the signal to a strongly typed internal API 140 or the unclassified signal processing stream 145.

Classified signals 130 are mapped to their corresponding previously learned or programmed signal types (or detector topic) such as netflow, configuration, and activity using the strongly typed internal API 140. A netflow signal is Internet Protocol (IP) information that informs a connection between devices such as ports, protocols, destination IP addresses, source IP addresses, and the like. A configuration signal is configuration parameters that various components are set-up with on a computing system using the control plane (e.g., a visibility flag configuration of an object bucket designated as public or private). An activity signal is an audit log of activity such as API calls occurring on the control plane or the data plane. Unclassified signals 135 are enter signal processing stream 145 and be passed through a separate learning process. Initially, the learning process is adapted to determine the basics around an unclassified signal 135. This basics include input format, record delimiter, field types and semantics. Thereafter, a special unclassified signal detector and topic are built based on the basics and the learning process are used unsupervised machine learning to determine normal vs. abnormal behavior within the unclassified signal 135. Anomalous behaviors are activities that deviate from a learned and well understood pattern. In some instances, the learning process for unclassified signals 135 may also require input from customers in the form of labels to assist and provide supervised learning. The learning process also tries to learn about unclassified signal targets. A target identifies an infrastructure compartment or resource that is the subject of the security architecture 110 configuration. A security architecture 110 configuration captures the information about which compartments within an infrastructure tenancy that the security architecture 110 monitors and which detectors to apply to which compartments. Targets may also be specific SaaS instances, for example an instance of the Human Capital Management Cloud. Targets should have an identifier such as Oracle Cloud IDs (OCIDs). The learning process allows a response recommender to choose the right responder for problems that are detected.

Once the classified signal 130 and/or unclassified signal 135 are typed or a detector topic is determined, the signals are forwarded into a stream processor 150 for real time analysis. Detectors 155 subscribe to the various signal types or detector topics coming into the stream processor 150. The subscribing essentially creates mappings between detectors 155 and the various signal types or detector topics. The mappings may be many to many mappings where certain detectors may be interested in certain pieces of data or certain combinations of multiple pieces of data, or where multiple detectors are consuming the same pieces of data or combinations of multiple pieces of data. The detectors 155 are adapted to derive problems 160 from the signals. For example, the security architecture 110 may support a network behavior anomaly detector that is subscribed to the netflow signal and adapted to detect anomalous behavior within the netflow signal indicative of a problem and a configuration drift detector that is subscribed to the configuration signal and adapted to detect anomalous behavior within the configuration signal indicative of a problem. The detectors 155 use heuristics, machine learning, or some combination of heuristics and machine learning techniques to detect anomalous behavior and derive the problems 160 from the signals. The detectors 155 may be stateless or stateful.

Conventionally the problems 160 trigger notices that are sent to a member(s) of a security team, and the member(s) review the problems and orchestrate remediation of the problems. However, this conventional process flow is time intensive and consumes a lot of resources (e.g., not enough member(s) available to handle all problems at a given time), and thus the response or remediation of the problems becomes delayed and disjointed from the cause of the problems. In order to overcome these challenges and others, various embodiments are directed to a response system 165 that can be used to auto-remediate the problems 160 with artificial intelligence. The problems 160 can be responded to in a number of ways and a set of responders 170 are provide that are adapted to take tangible action 175 (e.g., mitigating, corrective, or preventative action) against the problems 160. For example, one of the responders 170 may take action 175 to quarantine a compute instance if one of the detectors 155 detects a problem with that instance. In order to determine which responder to select (i.e., which action to be taken) for a given problem, response recommendations are implemented as part of the security architecture 110. Responders 170 are selected by the response recommender 180 based on the problem type, problem target, problem severity and other attributes. In some instances, users are able to configure the response recommender 180 with guidelines to limit what the response recommender 180 can recommend for a given problem 160. For example, a user may want to instruct the following: "Don't Suspend a user unless they have failed multi-factor authentication N times and are coming from a previously seen IP address." Alternatively, for a low severity warming the user may choose a simple notification.

As should be understood, it is important for the response recommender 180 to be able to learn from its mistakes. To that end, response system 165 provides a feedback loop, also known as active learning, which allows users to correct actions 175 that the response system 165 has taken and learn from those corrections. The active learning is implemented using artificial intelligence. Specifically, the response recommender 180 uses two or more prediction models to infer a best response to take for a given problem. A first model (described herein as a local model) will learn responder preferences for a specific user tenancy (e.g., specific to a given entity or organization). In general, the local model is the stronger model and if the local model shows high confidence it will be preferred. The second model (described herein as a global model) is an infrastructure-wide model that learns what all users (e.g., across all entities or organizations) generally prefer and will be used early on when the local model is first being learned. In some instances, as additional response recommender labels are gathered via the active learning, the local model will take over for the global model. Alternatively, as additional response recommender labels are gathered via the active learning, the local model will be used in combination with the global model. An optional third model (described herein as an intermediate level model(s)) will learn responder preferences for a sub-set of users (e.g., entities or organizations that are similar such as health care related entities or financial institutions) and will be used in combination with the local model and/or the global model.

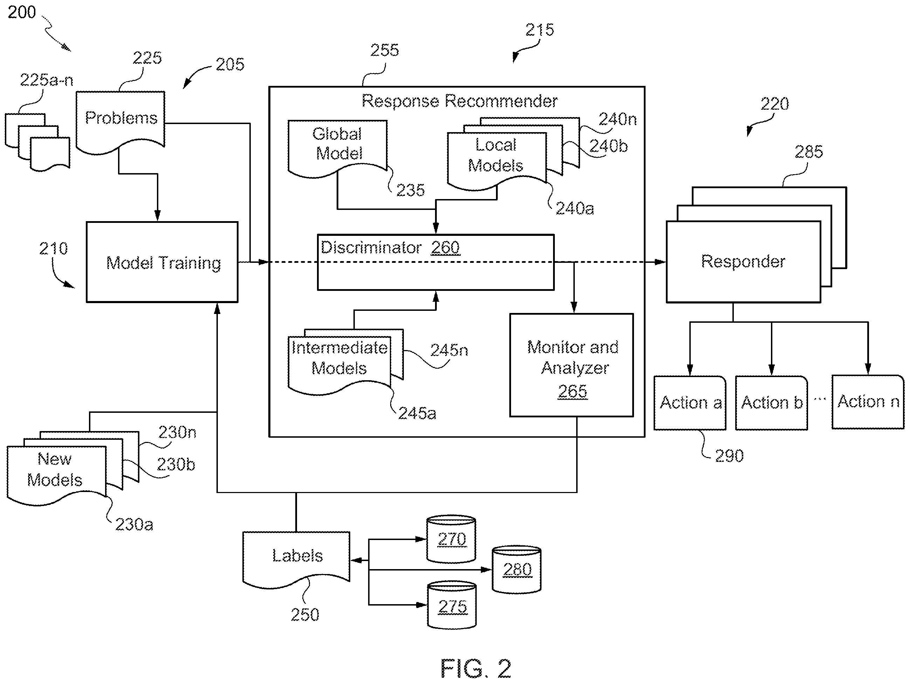

**FIG.** 2 is a block diagram illustrating response system 200 with active-learning in accordance with various embodiments. As described with respect to FIG. 1, the active-learning response performed by the response system 200 in this example includes several stages: an problem acquisition stage 205, a model training stage 210, response recommendation stage 215 with active learning, and a responder stage 220.

The problem acquisition stage 205 includes one or more detectors (e.g., detectors 155 described with respect to FIG. 1) for deriving problems 225 from signals of data coming from emitters and one or more repositories or data stores for storing problems. The problems 225 raised by detectors may be correlated and grouped to reduce duplicates and improve relevance. For example, if a single actor performs five activities from a suspicious IP, response system 200 may group these activities into a single problem. Problems may be correlated by infrastructure, emitter, resource type, tag, etc.

In instances in which new models 230a-230n (`n' represents any natural number)(which may be referred to herein individually as a new model 230 or collectively as the models 230) are to be trained prior to deployment, the problems 225 are obtained from problem acquisition stage 205 by the model training stage 210 and used for training the new models 230. The model training stage 210 may train one or more new models 230 to be used by the other stages in runtime. For example, the model training stage may train a local model prior to deployment using artificially created problems 225 or historical problems 225 encountered by similar local models in runtime. In instances in which new models 230a-230n are not trained prior to deployment, the problems 225 are obtained from problem acquisition stage 205 by response recommendation stage 215 and used in runtime for selecting responders and active-learning of global model 235, local models 240a-240n, and/or intermediate models 245a-245n. The various models (models 230; 235; 240; 245) can be any machine-learning ("MI,") model, such as a Gradient Boosting, Random Forest, Support Vector Machine (SVM), a convolutional neural network ("CNN"), e.g. an inception neural network, a residual neural network ("Resnet"), a U-Net, a V-Net, a single shot multibox detector ("SSD") network, or a recurrent neural network ("RNN"), or any combination thereof. The response system 200 may employ the same type of model or different types of models for response prediction and recommendation.

To train new models 230 in this example, problems 225 are obtained and arranged into a subset of problems 225a for training (e.g., 90%) and a subset of images 225b for validation/testing (e.g., 10%). The subset of problems 225a may be acquired from detectors. In some instances, the subset of problems 225a are acquired from a data storage structure such as a database, an SIEM or SOAR solution, or the like associated with the one or more detectors. In some instances, the subset of problems 225a are preprocessed and/or augmented to prepare the problems for training of the new models 230. For example, the data within the problems may be normalized to change the values in the dataset to a common scale, without distorting differences in the ranges of values and/or artificially augmented to increase the diversity of data available for training models, without actually collecting new data. In some instances, the subset of problems 225a are annotated with labels 250. Annotation can be performed manually by one or more humans (annotators such as a security team member) confirming the response that should be performed in response to each problem within the subset of problems 225a and providing labels 250 to the problems. The primary objective of the labeling and training of the new models 230 is to improve the inference of the response to the problems prior to deployment of the models within the response recommendation stage 215.

The training process includes selecting hyperparameters for the new models 230 and performing iterative operations of inputting problems from the subset of problems 225a into the new models 230 to find a set of model parameters (e.g., weights and/or biases) that minimizes the objective function for the new models 230. The hyperparameters are settings that can be tuned or optimized to control the behavior of the new models 230. Most models explicitly define hyperparameters that control different aspects of the models such as memory or cost of execution. However, additional hyperparameters may be defined to adapt a model to a specific scenario. For example, the hyperparameters may include the number of hidden units of a model, the learning rate of a model, weighting between loss terms, a convolution kernel width, a number of kernels for a model, learning rate, batch size, and batch composition.

Each iteration of training can involve finding a set of model parameters for the new models 230 (configured with a defined set of hyperparameters) so that the value of the objective function using the set of model parameters is smaller than the value of the objective function using a different set of model parameters in a previous iteration. The objective function can be constructed to measure the difference between the outputs inferred using the new models 230 and the groundtruths annotated to the problem using the labels 250. Once the set of model parameters are identified, the new models 230 have been trained and can be validated using the subset of images 225b (testing or validation data set). The validation process includes iterative operations of inputting problems from the subset of problems 225b into the new models 230 using a validation technique such as K-Fold Cross-Validation, Leave-one-out Cross-Validation, Leave-one-group-out Cross-Validation, Nested Cross-Validation, or the like to tune the hyperparameters and ultimately find the optimal set of hyperparameters. Once the optimal set of hyperparameters are obtained, a reserved test set of images from the subset of problems 225b are input into the new models 230 to obtain output (in this example, the inferred response or selection for a responder), and the output is evaluated versus ground truth responses using correlation techniques such as Bland-Altman method and the Spearman's rank correlation coefficients and calculating performance metrics such as the error, accuracy, precision, recall, receiver operating characteristic curve (ROC), etc.

As should be understood, other training/validation mechanisms are contemplated and may be implemented within the response system 200. For example, the new models 230 may be trained and hyperparameters may be tuned on problems from the subset of problems 225a and the problems from the subset of problems 225b may only be used for testing and evaluating performance of the models. Moreover, although the training mechanisms described with respect to models 230 focus on training new models. These training mechanisms can also be utilized to fine tune existing models 235; 240; 245 trained from other datasets or those that were only partially trained or not trained at all prior to deployment. For example, in some instances, a model 235; 240; 245 might have been pre-trained using problems detected from other entities or response systems, or a model 235; 240; 245 may be continuously trained using problems detected in real time during deployment. In such instances, the models 230; 235; 240; 245 can be continuously retrained (and optionally retested/validated) as part of the feedback loop or active learning processes described in detail herein.

The model training stage 210 outputs trained new models 230, untrained models 235; 240; 245, or retrained models 235; 240; 245 for use by the response recommendation stage 215 The response recommendation stage 215 comprises a response recommender 255 adapted to generate an inference or prediction of a response for a given problem 225. The response recommender 255 comprises a global model 235, one or more local models 240a-240n, optionally one or more intermediate models 245a-245n, a discriminator 260, and a monitor/analyzer 265. The response recommender 255 uses two or more prediction models (i.e., two or more models selected from the global model 235, the local models 240, and the intermediate models 245) to infer a best response to take for a given problem 225. The local models 240 have learned or are adapted to learn responder preferences for a specific user tenancy (e.g., specific to a given entity or organization). In general, the local models 240 are the stronger model, and if the local models 240 show a higher confidence score, the local models 240 should be preferred. The global model 235 is an infrastructure-wide model that has learned or is adapted to learn what all users (e.g., across all entities or organizations) generally prefer and will be used early on when the local models 240 are initially being learned or optimized. As additional response recommender labels are gathered via the active learning and used to train the local models 240 (via model training stage 210), the local models 240 may take over for the global model 235. Alternatively, as additional response recommender labels are gathered via the active learning and used to train the local models 240 (via model training stage 210), the local models 240 may be used in combination with the global model 235. The optional intermediate level models 245 have learned or are adapted to learn responder preferences for a sub-set of users (e.g., entities or organizations that are similar such as health care related entities or financial institutions) and may be used in combination with the local models 240 and/or the global model 235.

As described herein, the problem 225 is input into two or more prediction models (i.e., two or more models selected from the global model 235, the local models 240, and the intermediate models 245), each model generates an inferred response based on features (e.g., a discovered pattern of features) of the problem, and a final response (e.g., the best response) from the number of inferred responses is determined for a given problem 225 by the discriminator 260. The final response may be determined using one or more criteria. In some instances, the one or more criteria includes weighting of the two or more prediction models. The weights of the two or more prediction models can be dynamically changed as conditions of the models change (e.g., as the local model becomes trained and validated the weight of the model may be increased). For example, when a new user is first brought online their local model 240 may have little to no training, and thus the global model 235 may be assigned a higher weight than the local model 240 (optionally the intermediate models 245 may be assigned a middle value weight or the highest value weight), which may result in the inferred response of the global 235 and/or the intermediate models 245 being the final response based on a ranking of weighted responses from each model.

In some instances, the one or more criteria includes a confidence score of the inferred response from each of two or more prediction models. For example, a global model 235 may provide a inferred response with a confidence score of 80% and a local model 240 may provide a inferred response with a confidence score of 85%, which may result in the inferred response of the local model 240 being the final response based on a ranking of confidence scores for the inferred responses from each model. In some instances, the one or more criteria includes the weighting of the two or more prediction models and the confidence score of the inferred response from each of two or more prediction models. For example, once a local model 240 starts to train and its model parameters become learned, the weighting applied to the local model 240 may be increased to a point that is comparable to or surpass that of the global model 235. Further, the global model 235 may provide a inferred response with a confidence score of 87% and the local model 240 may provide a inferred response with a confidence score of 87%, which may result in the inferred response of the local model 240 being the final response based on a ranking of confidence scores that are factored to take into consideration the weights of the individual models.

The response recommender 255 is adapted to run in two modes: (i) a normal mode in which the response recommender 255 infers a response for a given problem 225 and selects a responder based on the inferred response, and (ii) a testing mode in which the response recommender 255 infers a response for a given problem 225 within an active learning environment in which the response recommender 255, prior to selection of a responder, queries a user (e.g., a security team member) and/or the monitor/analyzer 265 to accept or reject the inferred response (and optionally provide a correct or groundtruth response in the instance of the rejection of the inferred response). The acceptance or rejection of the inferred response (and optionally the provided correct or groundtruth response) are used to generate and provide the labels 250 for retraining or continuous training of the models 235; 240; 245. The users of the response system 200 may turn on/off the two modes (e.g., turn on/off the testing mode). In some instances, upon successful testing/validation of a given model (e.g., the model achieves accuracy of inference beyond a predetermined threshold), the response system 200 may prompt a user to turn off the testing mode (alternatively turn on the normal mode) or may automatically turn off the testing mode (alternatively turn on the normal mode) to stop or place a hold on training of the model(s). In some instances, upon detection of model drift of a given model (e.g., the model performance has drifted outside of acceptable criteria), the response system 200 may prompt a user to turn on the testing mode (alternatively turn off the normal mode) or may automatically turn on the testing mode (alternatively turn off the normal mode) to initiate retraining of the model(s). In some instances, the response system 200 may stay in testing mode at all times to allow for continuous active learning and training of the model(s).

The models 235; 240; 245 are trained and actively learn in three contexts: (i) globally, which is how the global model 235 has learned mappings between problems and responses globally with respect to preferences of all organizations or entities using the security architecture, (ii) locally, which is how the local models 240 have learned mappings between problems and responses with respect to preference of each organization or entity, respectfully, using the security architecture, and (iii) regionally, which is how the intermediate models 245 have learned mappings between problems and responses regionally with respect to preferences of a subgroup of organizations or entities using the security architecture. Within each of these contexts during active learning where correct or groundtruth responses are obtained from a user or the monitor/analyzer 265, the correct or groundtruth responses are used to generate and provide the labels 250 for retraining or continuous training of the models 235; 240; 245. The labels 250 generated from active learning may be stored respectively in the global repository 270, the local repository 275, and the intermediate repository 280. Thus, the active learning achieves two things: (i) a response to the problem (either generated by the model or corrected by the user), which can be used for selection of a responder, and (ii) labeled data for retraining or continuous training of the models 235; 240; 245.

For example, if a new user is brought online, they may start out with a response recommender 255 running the global model 235 continuously trained on problems and responses across all entities or organizations and a local model 240 that is either: (i) pre-trained on training data not necessarily specific to the new user (e.g., an artificially created training data set 225a) to learn an initial set of model parameters, or (ii) untrained with model parameters preselected and ready to be learned. Initially when problems start to be detected by the security architecture, the response recommender 255 for the new user may be configured in the testing mode, each problem will be input into the global model 235 and the local model 240, and both models 235; 240 will generate inferred responses based on features associated with the problem using the model parameters of each model. The discriminator 260 will evaluate the inferred responses and provide what is determined to be a final inferred response (in this example that would most likely be the inferred response from the global model 235). The monitor/analyzer 265 will monitor output of the discriminator 260, and when in testing mode, provide the final inferred response to a user for evaluation of accuracy or automatically evaluate the accuracy of the final inferred response. If the final inferred response is determined by the new user and/or the monitor/analyzer 265 to be accurate with respect to preferences of the new user, the response recommender 255 initiates the generation of a label 250 for the problem that includes the final inferred response. The problem and associated label 250 are stored in both the global repository 270 and local repository 275 for positive reinforcement training of both models 235; 240.

Alternatively, if the final inferred response is determined by the new user and/or the monitor/analyzer 265 to be inaccurate with respect to preferences of the new user, the new user and/or the monitor/analyzer 265 will provide the correct or groundtruth response, and the response recommender 255 initiates the generation of a label 250 that includes the correct or groundtruth response for the problem. The problem and associated label 250 are stored in the local repository 275 for corrective training of the local model 240. Additionally, the problem and associated label 250 are stored in a general repository and/or placed in a data queue for evaluation by an administrator of the security architecture. The administrator will evaluate the problem and associated label 250 to determine whether it should be included in the global repository 270 for corrective training of the global model 235. For example, if a problem has a set of features never seen before by the global model 235, then the inferred response is most likely inaccurate because of an instance of first impression and the administrator may determine that the problem and associated label 250 should be included in the global repository 270 for corrective training of the global model 240. In contrast, if problem has a set of features seen before by the global model 235 and the inferred response is accurate at least with respect to the global community of entities or organizations, then the inferred response is most likely inaccurate because of the preferences of the new user (e.g., the new user has a response they take that is specific to the context of the user) and the administrator may determine that the problem and associated label 250 should not be included in the global repository 270 for corrective training of the global model 235. Thus, the global model is highly curated by human administrators so as to not to introduce noise into the training and use thereof.

In some instances, the evaluation of the final response for accuracy by the new user and/or the monitor/analyzer 265 comprises a comparison between the final response and a groundtruth response that the user would prefer for the problem, and the accuracy of the final response is determined to be acceptable when the final response aligns with the groundtruth response based on the comparison or is determined to be unacceptable when the final response does not align with the groundtruth response based on the comparison. The groundtruth may be provide manually by the user and/or automatically by the monitor/analyzer 265 (e.g., retrieved from a repository). The alignment may be determined in a number of ways, for example, complete, substantially complete, or partial alignments/matches. In some instances, alignment is a complete match. For example, the final response - "raise multi factor authentication" would be determined to align/match with the groundtruth - "raise multi factor authentication." In additional or alternative instances, alignment is a substantially complete alignment/match or at least a partial alignment/match. As used herein, the terms "substantially," "approximately" and "about" are defined as being largely but not necessarily wholly what is specified (and include wholly what is specified) as understood by one of ordinary skill in the art. In any disclosed embodiment, the term "substantially," "approximately," or "about" may be substituted with "within [a percentage] of" what is specified, where the percentage includes 0.1, 1, 5, and 10 percent. For example, the final response - "raise authentication level" would be determined to align/match with the groundtruth - "raise multi factor authentication." Alternatively, the final response - "raise authentication level" would be determined to align/match with the groundtruth - "raise multi factor authentication" and/or "suspend user account."

In some instances, the evaluation of the final response for accuracy by the new user and/or the monitor/analyzer 265 further comprises analysis of the explanation for the final response. In some instances, each of the models 235; 340; 245 are adapted to explain their inferences in simple terms. For example: "I recommend suspending this user because they have generated N MFA problems, and in the majority of these types of cases, you have expressed that suspension is the correct response (the label)." While some ML models are a black box with no or little ability to explain decisions, other algorithms are in fact explainable. For example, a Gradient Boosting Machine may be constructed as a set of shallow decisions trees. An estimator for providing the explanation may be created by reducing the number of trees in the model and then traversing the tree to create an explanation. Other models such as SVM's (Support Vector Machine) also support explanations in the form of feature importance.

The response recommender 255 is further adapted to select a responder 285 from the responder stage 220 based on the output of the discriminator 260 (i.e., the final inferred response) or the user and/or monitor/analyzer 265 (i.e., the correct or groundtruth response). The responder stage 220 comprise multiple responders 285 for selection by the response recommender 255 and each responder is associated with one or more actions 290a-290n to be automatically taken by the security architecture for response or remediation to a given problem. The responders 285 may include active responders including: a quarantine responder, a shut down and snap shot responder, a disable bucket responder, a raise multi-factor authentication (MFA) responder, a suspend user account responder, a revert configuration responder, an add to blacklist responder, a disable Public IP responder, and the like. The responders 285 may include passive responders including: a notify responder, an event responder, and a log responder.

The quarantine responder will take action to quarantine specific infrastructure resources such as compute by means of disabling network access to those resources. The shut down and snap shot responder will take action to stop compute resources and immediately take a snapshot of the instance. This responder will stop threats associated with compute resources while allowing the user to capture state at the time of problem detection. The disable bucket responder will take action to disable (but not delete) an object store bucket that is misconfigured. For example, a bucket that has been given public access may be disabled through this responder. The MFA responder will take action to force end users to authenticate through multi-factor authentication. The suspend user account responder will take action to suspend an OCI user account. The revert configuration responder will take action to roll back a configuration change made by a user. The add to blacklist responder will take action to add a source IP address to a user CP/DP blacklist. The disable Public IP responder will take action to remove public IP addresses from infrastructure resources such as compute. The notify responder will take action to configure the infrastructure notification service to deliver problems through available notification methods. The event responder will take action to emit Cloud events enabling standard event outputs: Notifications, Streams and Functions. The log responder will take action to deliver problems as logs through the infrastructure Logging Service.

### Auto-Remediating Security Problems With Artificial Intelligence

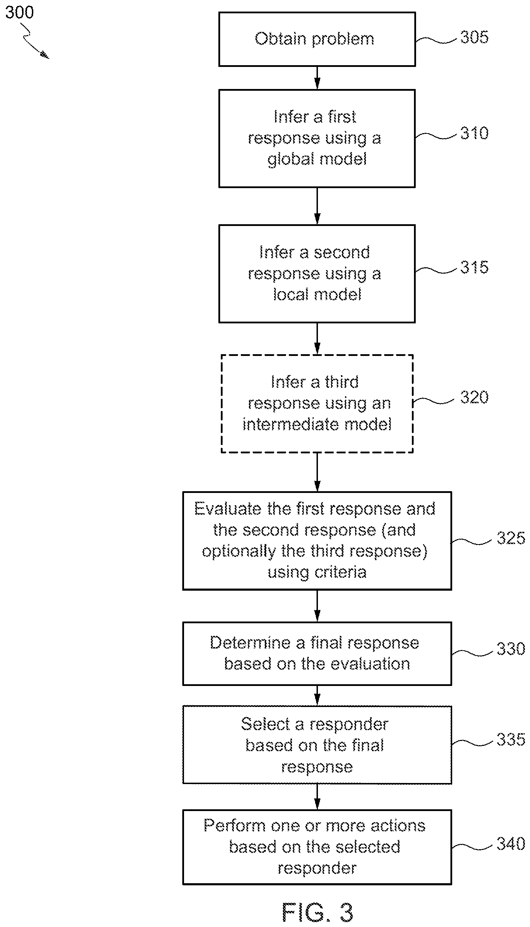

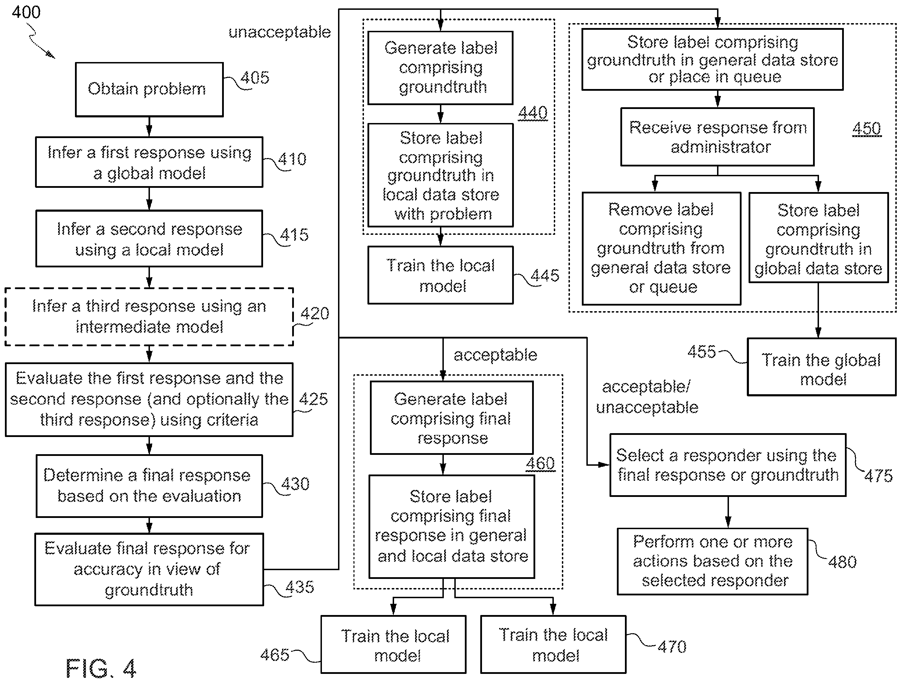

FIGS. 3 and 4 illustrate processes and operations for auto-remediating security problems with artificial intelligence. Individual embodiments may be described as a process which is depicted as a flowchart, a flow diagram, a data flow diagram, a structure diagram, or a block diagram. Although a flowchart may describe the operations as a sequential process, many of the operations may be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination may correspond to a return of the function to the calling function or the main function.

The processes and/or operations depicted in FIGS. 3 and 4 may be implemented in software (e.g., code, instructions, program) executed by one or more processing units (e.g., processors cores), hardware, or combinations thereof. The software may be stored in a memory (e.g., on a memory device, on a non-transitory computer-readable storage medium). The particular series of processing steps in FIGS. 3 and 4 is not intended to be limiting. Other sequences of steps may also be performed according to alternative embodiments. For example, in alternative embodiments the steps outlined above may be performed in a different order. Moreover, the individual steps illustrated in FIGS. 3 and 4 may include multiple sub-steps that may be performed in various sequences as appropriate to the individual step. Furthermore, additional steps may be added or removed depending on the particular applications. One of ordinary skill in the art would recognize many variations, modifications, and alternatives.

**FIG.** 3 shows a flowchart 300 that illustrates a process for auto-remediating security problems with two or more prediction models. In some embodiments, the processes depicted in flowchart 300 may be implemented by the architecture, systems, and techniques depicted in FIGS. 1 and 2. For example, the processes may be implemented in a response system with active-learning to automate selection of a responder as a response to a detected problem within a security architecture. The response system implements at least two models that actively learn in at least two contexts: (i) globally, which is how a global model has learned mappings between problems and responses globally with respect to preferences of all users using the security architecture, (ii) locally, which is how a local model has learned mappings between problems and responses with respect to preference of each user using the security architecture.

At step 305, a problem is obtained by a response system of a security architecture. The problem may have been detected by a detector within a signal from an emitter associated with a user. The problem is a possible security event that the security architecture is adapted to respond to and remediate.

At step 310, a first response is inferred, using a global model implemented as part of the response system that takes as input the problem. The global model comprises a global set of model parameters learned from mappings between problems and responses globally with respect to preferences of all users (e.g., all the entities or organizations) using the security architecture. In other words, the global set of model parameters are learned from training data comprising labels and problems (i.e., supervised learning) that comprise groundtruth responses that replicate preferences of all users using the security architecture. The preferences are the responses that the users would expect to be taken for the problems. "Alice's user credentials have been compromised" is an example of a given problem and "suspend user account" and/or "shut down and snapshot" are examples of preferred responses by the global community of users.

At step 315, a second response is inferred, using a local model implemented as part of the response system that takes as input the problem. The local model comprises a local set of model parameters learned from mappings between problems and responses locally with respect to preferences of the user (e.g., an entity or organization). In other words, the local set of model parameters are learned from training data comprising labels and problems (i.e., supervised learning) that comprise groundtruth responses that replicate preferences of the user using the security architecture. The preferences are the responses that the user would expect to be taken for the problems. "Alice's user credentials have been compromised" is an example of a given problem and "raise multi factor authentication" is a preferred responses by the user.

At optional step 320, a third response is inferred, using a intermediate model implemented as part of the response system that takes as input the problem. The third response may be inferred as an alternative to the first response or in addition to the first response and the second response. The intermediate model comprises a regional set of model parameters learned from mappings between problems and responses regionally with respect to preferences of a subgroup of users (e.g., entities or organizations within a given industry) using the security architecture. In other words, the regional set of model parameters are learned from training data comprising labels and problems (i.e., supervised learning) that comprise groundtruth responses that replicate preferences of a subgroup of users using the security architecture. The preferences are the responses that the subgroup of users would expect to be taken for the problems. "Alice's user credentials have been compromised" is an example of a given problem and "suspend user account" and/or "raise multi factor authentication" are examples of preferred responses by the regional community of users.

At step 325, the first response and the second response (and optionally the third response) are evaluated using criteria. In some instances, the criteria includes weighting of the global model and the local model (and optionally the intermediate model). The weights of the models can be dynamically changed as conditions of the models change (e.g., as the local model becomes trained and validated the weight of the model may be increased). For example, when a new user is first brought online their local model may have little to no training, and thus the global model may be assigned a higher weight than the local model (optionally the intermediate models may be assigned a middle value weight or the highest value weight), which may result in the inferred response of the global and/or the intermediate models being the final response based on a ranking of weighted responses from each model.

In some instances, the criteria includes a confidence score of the inferred response from each of the global model and the local model (and optionally the intermediate model). The confidence score may be calculate in accordance with any known process (e.g., softmax, a predict function/operation, a Bayesian Network, and the like are all known processes that could be implemented to estimate a confidence of the model's prediction). For example, the global model may provide a inferred response with a confidence score of 80% and the local model may provide a inferred response with a confidence score of 85%, which may result in the inferred response of the local model being the final response based on a ranking of confidence scores for the inferred responses from each model. In some instances, the criteria comprises: (i) a confidence score associated with each of the first response and the second response (and optionally the third response), and (ii) a weight associated with each of the global model and the local model (and optionally the intermediate model).

At step 330, a final response is determined by the response system for the problem based on the evaluation of the first response and the second response (and optionally the third response). For example, if a ranking of the models by weights indicates that the global model response is the best response (e.g., the highest ranked model based on weighting), then the first response is determined to be the final response. Alternatively, if a ranking of the models by confidence score indicates that the local model response is the best response (e.g., the highest ranked response based on confidence score), then the second response is determined to be the final response. Alternatively, if a ranking of the models by confidence score factored by weights indicates that the local model response is the best response (e.g., the highest ranked response/model based on confidence score factored by weighting), then the second response is determined to be the final response.

At step 335, a responder is selected by the response system from a set of responders based on the final response. The responder is adapted to take one or more actions to respond to the problem. For example, if the final response is "suspend user account" then the response system will select the suspend user account responder to take the action of suspending the user account to solve the problem of "Alice's user credentials have been compromised."

At step 340, the response system performs the one or more actions to respond to the problem based on the selected responder. For example, the suspend user account responder takes the action of suspending the user account to solve the problem of "Alice's user credentials have been compromised."

FIG. 4 shows a flowchart 400 that illustrates a process for auto-remediating security problems with two or more prediction models implemented with active-learning. In some embodiments, the processes depicted in flowchart 400 may be implemented by the architecture, systems, and techniques depicted in FIGS. 1 and 2. For example, the processes may be implemented in a response system with active-learning to automate selection of a responder as a response to a detected problem within a security architecture. The response system implements at least two models that actively learn in at least two contexts: (i) globally, which is how a global model has learned mappings between problems and responses globally with respect to preferences of all users using the security architecture, (ii) locally, which is how a local model has learned mappings between problems and responses with respect to preference of each user using the security architecture.

At step 405, a problem is obtained by a response system of a security architecture. The problem may have been detected by a detector within a signal from an emitter associated with a user. The problem is a possible security event that the security architecture is adapted to respond to and remediate.

At step 410, a first response is inferred, using a global model implemented as part of the response system that takes as input the problem. The global model comprises a global set of model parameters learned from mappings between problems and responses globally with respect to preferences of all users (e.g., all the entities or organizations) using the security architecture. In other words, the global set of model parameters are learned from training data comprising labels and problems (i.e., supervised learning) that comprise groundtruth responses that replicate preferences of all users using the security architecture. The preferences are the responses that the users would expect to be taken for the problems. "Alice's user credentials have been compromised" is an example of a given problem and "suspend user account" and/or "shut down and snapshot" are examples of preferred responses by the global community of users.

At step 415, a second response is inferred, using a local model implemented as part of the response system that takes as input the problem. The local model comprises a local set of model parameters learned from mappings between problems and responses locally with respect to preferences of the user (e.g., an entity or organization). In other words, the local set of model parameters are learned from training data comprising labels and problems (i.e., supervised learning) that comprise groundtruth responses that replicate preferences of the user using the security architecture. The preferences are the responses that the user would expect to be taken for the problems. "Alice's user credentials have been compromised" is an example of a given problem and "raise multi factor authentication" is a preferred responses by the user.

At optional step 420, a third response is inferred, using a intermediate model implemented as part of the response system that takes as input the problem. The third response may be inferred as an alternative to the first response or in addition to the first response and the second response. The intermediate model comprises a regional set of model parameters learned from mappings between problems and responses regionally with respect to preferences of a subgroup of users (e.g., entities or organizations within a given industry) using the security architecture. In other words, the regional set of model parameters are learned from training data comprising labels and problems (i.e., supervised learning) that comprise groundtruth responses that replicate preferences of a subgroup of users using the security architecture. The preferences are the responses that the subgroup of users would expect to be taken for the problems. "Alice's user credentials have been compromised" is an example of a given problem and "suspend user account" and/or "raise multi factor authentication" are examples of preferred responses by the regional community of users.

At step 425, the first response and the second response (and optionally the third response) are evaluated using criteria. In some instances, the criteria includes weighting of the global model and the local model (and optionally the intermediate model). The weights of the models can be dynamically changed as conditions of the models change (e.g., as the local model becomes trained and validated the weight of the model may be increased). For example, when a new user is first brought online their local model may have little to no training, and thus the global model may be assigned a higher weight than the local model (optionally the intermediate models may be assigned a middle value weight or the highest value weight), which may result in the inferred response of the global and/or the intermediate models being the final response based on a ranking of weighted responses from each model.

In some instances, the criteria includes a confidence score of the inferred response from each of the global model and the local model (and optionally the intermediate model). The confidence score may be calculate in accordance with any known process (e.g., softmax, a predict function/operation, a Bayesian Network, and the like are all known processes that could be implemented to estimate a confidence of the model's prediction). For example, the global model may provide a inferred response with a confidence score of 80% and the local model may provide a inferred response with a confidence score of 85%, which may result in the inferred response of the local model being the final response based on a ranking of confidence scores for the inferred responses from each model. In some instances, the criteria comprises: (i) a confidence score associated with each of the first response and the second response (and optionally the third response), and (ii) a weight associated with each of the global model and the local model (and optionally the intermediate model).

At step 430, a final response is determined by the response system for the problem based on the evaluation of the first response and the second response (and optionally the third response). For example, if a ranking of the models by weights indicates that the global model response is the best response (e.g., the highest ranked model based on weighting), then the first response is determined to be the final response. Alternatively, if a ranking of the models by confidence score indicates that the local model response is the best response (e.g., the highest ranked response based on confidence score), then the second response is determined to be the final response. Alternatively, if a ranking of the models by confidence score factored by weights indicates that the local model response is the best response (e.g., the highest ranked response/model based on confidence score factored by weighting), then the second response is determined to be the final response.

At step 435, the final response is evaluated by the response system for accuracy. The accuracy is evaluated based on a comparison between the final response and a groundtruth response that the user would prefer for the problem, and the accuracy of the final response is determined to be acceptable when the final response aligns with the groundtruth response based on the comparison or is determined to be unacceptable when the final response does not align with the groundtruth response based on the comparison. The groundtruth may be provide manually by the user and/or automatically by the monitor/analyzer component of the response system (e.g., retrieved from a repository). The alignment may be determined in a number of ways, for example, complete, substantially complete, or partial alignments/matches. In some instances, alignment is a complete match. In additional or alternative instances, alignment is a substantially complete alignment/match or at least a partial alignment/match.

At step 440, responsive to the accuracy being determined to be unacceptable, the response system: (i) generates a label for the problem (the label comprises the groundtruth response), (ii) stores the label comprising the ground truth and the problem in a local data store (repository), and (iii) selects a responder at step 475 from a set of responders based on the groundtruth rather than the final response. The responder is adapted to take one or more actions to respond to the problem. For example, if the groundtruth is "suspend user account" then the response system will select the suspend user account responder to take the action of suspending the user account to solve the problem of "Alice's user credentials have been compromised."

At step 445, the response system initiates training (i.e., active learning) of the local model with local training data from the local repository. The local training data includes the label comprising the groundtruth and the problem. The training may be initiated continuously such that the local model parameters of the local model are continuously learning from the local training data. Alternatively, the training may be initiated in batch or scheduled process for retraining such that the local model parameters of the local model are learning from the local training data periodically.

At step 450, responsive to the accuracy being determined to be unacceptable, the response system: (i) stores the label comprising the ground truth and problem in a general data store or places the label comprising the ground truth and the problem in a data queue for evaluation by an administrator, (ii) receives a response from the administrator to either take no action with the respect to the label comprising the ground truth and the problem or to train the global model using the label comprising the ground truth and the problem, (iii) responsive to response being to take no action, removing the label comprising the ground truth and the problem from the data store or the data queue, and (iv) responsive to the response being to train the global model, storing the label comprising the ground truth and the problem in the global repository.

At step 455, the response system initiates training (i.e., active learning) of the global model with global training data from the global repository. The global training data includes the label comprising the groundtruth and the problem. The training may be initiated continuously such that the global model parameters of the global model are continuously learning from the global training data. Alternatively, the training may be initiated in batch or scheduled process for retraining such that the global model parameters of the global model are learning from the global training data periodically.

At step 460, responsive to the accuracy being determined to be acceptable, the response system: (i) generates a label for the problem (the label comprises the final response), and (ii) stores the label comprising the final response and the problem in the local data store and the global data store.

At step 465, the response system initiates training (i.e., active learning) of the global model with global training data from the global repository. The global training data includes the label comprising the groundtruth and the problem. The training may be initiated continuously such that the global model parameters of the global model are continuously learning from the global training data. Alternatively, the training may be initiated in batch or scheduled process for retraining such that the global model parameters of the global model are learning from the global training data periodically.

At step 470, the response system initiates training (i.e., active learning) of the local model with local training data from the local repository. The local training data includes the label comprising the groundtruth and the problem. The training may be initiated continuously such that the local model parameters of the local model are continuously learning from the local training data. Alternatively, the training may be initiated in batch or scheduled process for retraining such that the local model parameters of the local model are learning from the local training data periodically.

At step 475, a responder is selected by the response system from a set of responders based on the final response. The responder is adapted to take one or more actions to respond to the problem. For example, if the final response is "suspend user account" then the response system will select the suspend user account responder to take the action of suspending the user account to solve the problem of "Alice's user credentials have been compromised."

At step 480, the response system performs the one or more actions to respond to the problem. For example, the suspend user account responder takes the action of suspending the user account to solve the problem of "Alice's user credentials have been compromised."

### Illustrative Systems

As noted above, infrastructure as a service (IaaS) is one particular type of cloud computing. IaaS can be configured to provide virtualized computing resources over a public network (e.g., the Internet). In an IaaS model, a cloud computing provider can host the infrastructure components (e.g., servers, storage devices, network nodes (e.g., hardware), deployment software, platform virtualization (e.g., a hypervisor layer), or the like). In some cases, an IaaS provider may also supply a variety of services to accompany those infrastructure components (e.g., billing, monitoring, logging, security, load balancing and clustering, etc.). Thus, as these services may be policy-driven, IaaS users may be able to implement policies to drive load balancing to maintain application availability and performance.

In some instances, IaaS customers may access resources and services through a wide area network (WAN), such as the Internet, and can use the cloud provider's services to install the remaining elements of an application stack. For example, the user can log in to the IaaS platform to create virtual machines (VMs), install operating systems (OSs) on each VM, deploy middleware such as databases, create storage buckets for workloads and backups, and even install enterprise software into that VM. Customers can then use the provider's services to perform various functions, including balancing network traffic, troubleshooting application issues, monitoring performance, managing disaster recovery, etc.

In most cases, a cloud computing model will require the participation of a cloud provider. The cloud provider may, but need not be, a third-party service that specializes in providing (e.g., offering, renting, selling) IaaS. An entity might also opt to deploy a private cloud, becoming its own provider of infrastructure services.

In some examples, IaaS deployment is the process of putting a new application, or a new version of an application, onto a prepared application server or the like. It may also include the process of preparing the server (e.g., installing libraries, daemons, etc.). This is often managed by the cloud provider, below the hypervisor layer (e.g., the servers, storage, network hardware, and virtualization). Thus, the customer may be responsible for handling (OS), middleware, and/or application deployment (e.g., on self-service virtual machines (e.g., that can be spun up on demand) or the like.

In some examples, IaaS provisioning may refer to acquiring computers or virtual hosts for use, and even installing needed libraries or services on them. In most cases, deployment does not include provisioning, and the provisioning may need to be performed first.

In some cases, there are two different challenges for IaaS provisioning. First, there is the initial challenge of provisioning the initial set of infrastructure before anything is running. Second, there is the challenge of evolving the existing infrastructure (e.g., adding new services, changing services, removing services, etc.) once everything has been provisioned. In some cases, these two challenges may be addressed by enabling the configuration of the infrastructure to be defined declaratively. In other words, the infrastructure (e.g., what components are needed and how they interact) can be defined by one or more configuration files. Thus, the overall topology of the infrastructure (e.g., what resources depend on which, and how they each work together) can be described declaratively. In some instances, once the topology is defined, a workflow can be generated that creates and/or manages the different components described in the configuration files.

In some examples, an infrastructure may have many interconnected elements. For example, there may be one or more virtual private clouds (VPCs) (e.g., a potentially on-demand pool of configurable and/or shared computing resources), also known as a core network. In some examples, there may also be one or more security group rules provisioned to define how the security of the network will be set up and one or more virtual machines (VMs). Other infrastructure elements may also be provisioned, such as a load balancer, a database, or the like. As more and more infrastructure elements are desired and/or added, the infrastructure may incrementally evolve.

In some instances, continuous deployment techniques may be employed to enable deployment of infrastructure code across various virtual computing environments. Additionally, the described techniques can enable infrastructure management within these environments. In some examples, service teams can write code that is desired to be deployed to one or more, but often many, different production environments (e.g., across various different geographic locations, sometimes spanning the entire world). However, in some examples, the infrastructure on which the code will be deployed must first be set up. In some instances, the provisioning can be done manually, a provisioning tool may be utilized to provision the resources, and/or deployment tools may be utilized to deploy the code once the infrastructure is provisioned.

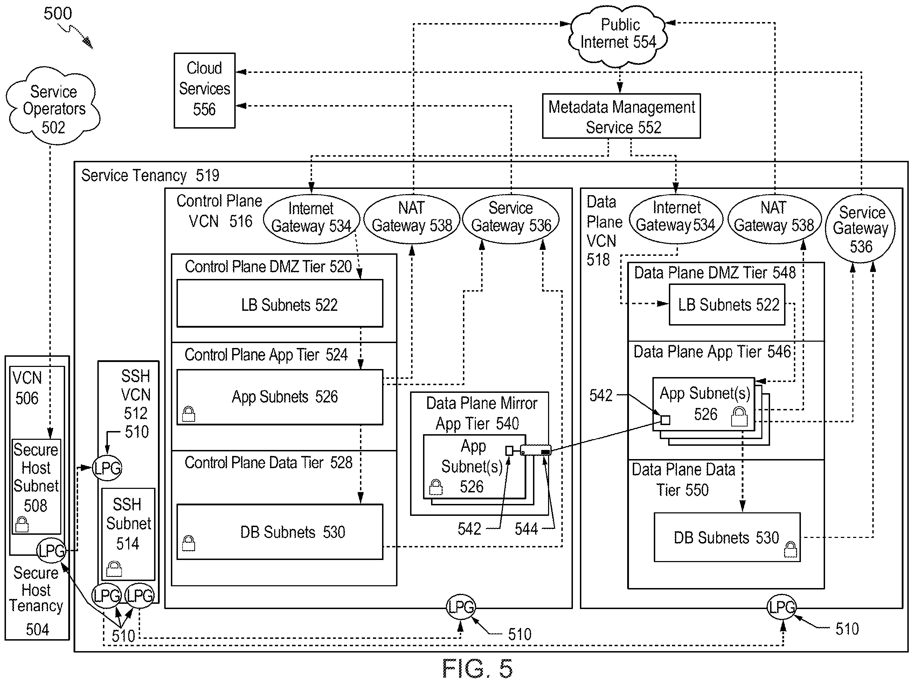

FIG. 5 is a block diagram 500 illustrating an example pattern of an IaaS architecture, according to at least one embodiment. Service operators 502 can be communicatively coupled to a secure host tenancy 504 that can include a virtual cloud network (VCN) 506 and a secure host subnet 508. In some examples, the service operators 502 may be using one or more client computing devices, which may be portable handheld devices (e.g., an iPhone^{®}, cellular telephone, an iPad^{®}, computing tablet, a personal digital assistant (PDA)) or wearable devices (e.g., a Google Glass^{®} head mounted display), running software such as Microsoft Windows Mobile^{®}, and/or a variety of mobile operating systems such as iOS, Windows Phone, Android, BlackBerry 8, Palm OS, and the like, and being Internet, e-mail, short message service (SMS), Blackberry^{®}, or other communication protocol enabled. Alternatively, the client computing devices can be general purpose personal computers including, by way of example, personal computers and/or laptop computers running various versions of Microsoft Windows^{®}, Apple Macintosh^{®}, and/or Linux operating systems. The client computing devices can be workstation computers running any of a variety of commercially-available UNIX^{®} or UNIX-like operating systems, including without limitation the variety of GNU/Linux operating systems, such as for example, Google Chrome OS. Alternatively, or in addition, client computing devices may be any other electronic device, such as a thin-client computer, an Internet-enabled gaming system (e.g., a Microsoft Xbox gaming console with or without a Kinect^{®} gesture input device), and/or a personal messaging device, capable of communicating over a network that can access the VCN 506 and/or the Internet.

The VCN 506 can include a local peering gateway (LPG) 510 that can be communicatively coupled to a secure shell (SSH) VCN 512 via an LPG 510 contained in the SSH VCN 512. The SSH VCN 512 can include an SSH subnet 514, and the SSH VCN 512 can be communicatively coupled to a control plane VCN 516 via the LPG 510 contained in the control plane VCN 516. Also, the SSH VCN 512 can be communicatively coupled to a data plane VCN 518 via an LPG 510. The control plane VCN 516 and the data plane VCN 518 can be contained in a service tenancy 519 that can be owned and/or operated by the IaaS provider.

The control plane VCN 516 can include a control plane demilitarized zone (DMZ) tier 520 that acts as a perimeter network (e.g., portions of a corporate network between the corporate intranet and external networks). The DMZ-based servers may have restricted responsibilities and help keep security breaches contained. Additionally, the DMZ tier 520 can include one or more load balancer (LB) subnet(s) 522, a control plane app tier 524 that can include app subnet(s) 526, a control plane data tier 528 that can include database (DB) subnet(s) 530 (e.g., frontend DB subnet(s) and/or backend DB subnet(s)). The LB subnet(s) 522 contained in the control plane DMZ tier 520 can be communicatively coupled to the app subnet(s) 526 contained in the control plane app tier 524 and an Internet gateway 534 that can be contained in the control plane VCN 516, and the app subnet(s) 526 can be communicatively coupled to the DB subnet(s) 530 contained in the control plane data tier 528 and a service gateway 536 and a network address translation (NAT) gateway 538. The control plane VCN 516 can include the service gateway 536 and the NAT gateway 538.

The control plane VCN 516 can include a data plane mirror app tier 540 that can include app subnet(s) 526. The app subnet(s) 526 contained in the data plane mirror app tier 540 can include a virtual network interface controller (VNIC) 542 that can execute a compute instance 544. The compute instance 544 can communicatively couple the app subnet(s) 526 of the data plane mirror app tier 540 to app subnet(s) 526 that can be contained in a data plane app tier 546.

The data plane VCN 518 can include the data plane app tier 546, a data plane DMZ tier 548, and a data plane data tier 550. The data plane DMZ tier 548 can include LB subnet(s) 522 that can be communicatively coupled to the app subnet(s) 526 of the data plane app tier 546 and the Internet gateway 534 of the data plane VCN 518. The app subnet(s) 526 can be communicatively coupled to the service gateway 536 of the data plane VCN 518 and the NAT gateway 538 of the data plane VCN 518. The data plane data tier 550 can also include the DB subnet(s) 530 that can be communicatively coupled to the app subnet(s) 526 of the data plane app tier 546.

The Internet gateway 534 of the control plane VCN 516 and of the data plane VCN 518 can be communicatively coupled to a metadata management service 552 that can be communicatively coupled to public Internet 554. Public Internet 554 can be communicatively coupled to the NAT gateway 538 of the control plane VCN 516 and of the data plane VCN 518. The service gateway 536 of the control plane VCN 516 and of the data plane VCN 518 can be communicatively couple to cloud services 556.

In some examples, the service gateway 536 of the control plane VCN 516 or of the data plane VCN 518 can make application programming interface (API) calls to cloud services 556 without going through public Internet 554. The API calls to cloud services 556 from the service gateway 536 can be one-way: the service gateway 536 can make API calls to cloud services 556, and cloud services 556 can send requested data to the service gateway 536. But, cloud services 556 may not initiate API calls to the service gateway 536.

In some examples, the secure host tenancy 504 can be directly connected to the service tenancy 519, which may be otherwise isolated. The secure host subnet 508 can communicate with the SSH subnet 514 through an LPG 510 that may enable two-way communication over an otherwise isolated system. Connecting the secure host subnet 508 to the SSH subnet 514 may give the secure host subnet 508 access to other entities within the service tenancy 519.

The control plane VCN 516 may allow users of the service tenancy 519 to set up or otherwise provision desired resources. Desired resources provisioned in the control plane VCN 516 may be deployed or otherwise used in the data plane VCN 518. In some examples, the control plane VCN 516 can be isolated from the data plane VCN 518, and the data plane mirror app tier 540 of the control plane VCN 516 can communicate with the data plane app tier 546 of the data plane VCN 518 via VNICs 542 that can be contained in the data plane mirror app tier 540 and the data plane app tier 546.

In some examples, users of the system, or customers, can make requests, for example create, read, update, or delete (CRUD) operations, through public Internet 554 that can communicate the requests to the metadata management service 552. The metadata management service 552 can communicate the request to the control plane VCN 516 through the Internet gateway 534. The request can be received by the LB subnet(s) 522 contained in the control plane DMZ tier 520. The LB subnet(s) 522 may determine that the request is valid, and in response to this determination, the LB subnet(s) 522 can transmit the request to app subnet(s) 526 contained in the control plane app tier 524. If the request is validated and requires a call to public Internet 554, the call to public Internet 554 may be transmitted to the NAT gateway 538 that can make the call to public Internet 554. Memory that may be desired to be stored by the request can be stored in the DB subnet(s) 530.

In some examples, the data plane mirror app tier 540 can facilitate direct communication between the control plane VCN 516 and the data plane VCN 518. For example, changes, updates, or other suitable modifications to configuration may be desired to be applied to the resources contained in the data plane VCN 518. Via a VNIC 542, the control plane VCN 516 can directly communicate with, and can thereby execute the changes, updates, or other suitable modifications to configuration to, resources contained in the data plane VCN 518.

In some embodiments, the control plane VCN 516 and the data plane VCN 518 can be contained in the service tenancy 519. In this case, the user, or the customer, of the system may not own or operate either the control plane VCN 516 or the data plane VCN 518. Instead, the IaaS provider may own or operate the control plane VCN 516 and the data plane VCN 518, both of which may be contained in the service tenancy 519. This embodiment can enable isolation of networks that may prevent users or customers from interacting with other users', or other customers', resources. Also, this embodiment may allow users or customers of the system to store databases privately without needing to rely on public Internet 554, which may not have a desired level of security, for storage.

In other embodiments, the LB subnet(s) 522 contained in the control plane VCN 516 can be configured to receive a signal from the service gateway 536. In this embodiment, the control plane VCN 516 and the data plane VCN 518 may be configured to be called by a customer of the IaaS provider without calling public Internet 554. Customers of the IaaS provider may desire this embodiment since database(s) that the customers use may be controlled by the IaaS provider and may be stored on the service tenancy 519, which may be isolated from public Internet 554.

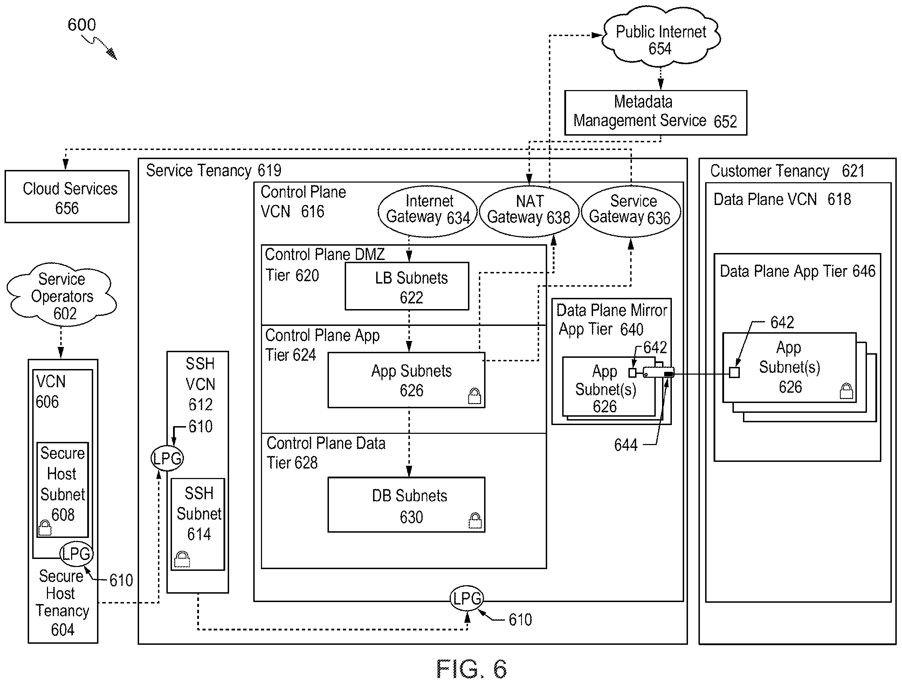

FIG. 6 is a block diagram 600 illustrating another example pattern of an IaaS architecture, according to at least one embodiment. Service operators 602 (e.g. service operators 502 of FIG. 5) can be communicatively coupled to a secure host tenancy 604 (e.g. the secure host tenancy 504 of FIG. 5) that can include a virtual cloud network (VCN) 606 (e.g. the VCN 506 of FIG. 5) and a secure host subnet 608 (e.g. the secure host subnet 508 of FIG. 5). The VCN 606 can include a local peering gateway (LPG) 610 (e.g. the LPG 510 of FIG. 5) that can be communicatively coupled to a secure shell (SSH) VCN 612 (e.g. the SSH VCN 512 of FIG. 5) via an LPG 510 contained in the SSH VCN 612. The SSH VCN 612 can include an SSH subnet 614 (e.g. the SSH subnet 514 of FIG. 5), and the SSH VCN 612 can be communicatively coupled to a control plane VCN 616 (e.g. the control plane VCN 516 of FIG. 5) via an LPG 610 contained in the control plane VCN 616. The control plane VCN 616 can be contained in a service tenancy 619 (e.g. the service tenancy 519 of FIG. 5), and the data plane VCN 618 (e.g. the data plane VCN 518 of FIG. 5) can be contained in a customer tenancy 621 that may be owned or operated by users, or customers, of the system.

The control plane VCN 616 can include a control plane DMZ tier 620 (e.g. the control plane DMZ tier 520 of FIG. 5) that can include LB subnet(s) 622 (e.g. LB subnet(s) 522 of FIG. 5), a control plane app tier 624 (e.g. the control plane app tier 524 of FIG. 5) that can include app subnet(s) 626 (e.g. app subnet(s) 526 of FIG. 5), a control plane data tier 628 (e.g. the control plane data tier 528 of FIG. 5) that can include database (DB) subnet(s) 630 (e.g. similar to DB subnet(s) 530 of FIG. 5). The LB subnet(s) 622 contained in the control plane DMZ tier 620 can be communicatively coupled to the app subnet(s) 626 contained in the control plane app tier 624 and an Internet gateway 634 (e.g. the Internet gateway 534 of FIG. 5) that can be contained in the control plane VCN 616, and the app subnet(s) 626 can be communicatively coupled to the DB subnet(s) 630 contained in the control plane data tier 628 and a service gateway 636 (e.g. the service gateway of FIG. 5) and a network address translation (NAT) gateway 638 (e.g. the NAT gateway 538 of FIG. 5). The control plane VCN 616 can include the service gateway 636 and the NAT gateway 638.

The control plane VCN 616 can include a data plane mirror app tier 640 (e.g. the data plane mirror app tier 540 of FIG. 5) that can include app subnet(s) 626. The app subnet(s) 626 contained in the data plane mirror app tier 640 can include a virtual network interface controller (VNIC) 642 (e.g. the VNIC of 542) that can execute a compute instance 644 (e.g. similar to the compute instance 544 of FIG. 5). The compute instance 644 can facilitate communication between the app subnet(s) 626 of the data plane mirror app tier 640 and the app subnet(s) 626 that can be contained in a data plane app tier 646 (e.g. the data plane app tier 546 of FIG. 5) via the VNIC 642 contained in the data plane mirror app tier 640 and the VNIC 642 contained in the data plane app tier 646.

The Internet gateway 634 contained in the control plane VCN 616 can be communicatively coupled to a metadata management service 652 (e.g. the metadata management service 552 of FIG. 5) that can be communicatively coupled to public Internet 654 (e.g. public Internet 554 of FIG. 5). Public Internet 654 can be communicatively coupled to the NAT gateway 638 contained in the control plane VCN 616. The service gateway 636 contained in the control plane VCN 616 can be communicatively couple to cloud services 656 (e.g. cloud services 556 of FIG. 5).

In some examples, the data plane VCN 618 can be contained in the customer tenancy 621. In this case, the IaaS provider may provide the control plane VCN 616 for each customer, and the IaaS provider may, for each customer, set up a unique compute instance 644 that is contained in the service tenancy 619. Each compute instance 644 may allow communication between the control plane VCN 616, contained in the service tenancy 619, and the data plane VCN 618 that is contained in the customer tenancy 621. The compute instance 644 may allow resources, that are provisioned in the control plane VCN 616 that is contained in the service tenancy 619, to be deployed or otherwise used in the data plane VCN 618 that is contained in the customer tenancy 621.

In other examples, the customer of the IaaS provider may have databases that live in the customer tenancy 621. In this example, the control plane VCN 616 can include the data plane mirror app tier 640 that can include app subnet(s) 626. The data plane mirror app tier 640 can reside in the data plane VCN 618, but the data plane mirror app tier 640 may not live in the data plane VCN 618. That is, the data plane mirror app tier 640 may have access to the customer tenancy 621, but the data plane mirror app tier 640 may not exist in the data plane VCN 618 or be owned or operated by the customer of the IaaS provider. The data plane mirror app tier 640 may be configured to make calls to the data plane VCN 618 but may not be configured to make calls to any entity contained in the control plane VCN 616. The customer may desire to deploy or otherwise use resources in the data plane VCN 618 that are provisioned in the control plane VCN 616, and the data plane mirror app tier 640 can facilitate the desired deployment, or other usage of resources, of the customer.

In some embodiments, the customer of the IaaS provider can apply filters to the data plane VCN 618. In this embodiment, the customer can determine what the data plane VCN 618 can access, and the customer may restrict access to public Internet 654 from the data plane VCN 618. The IaaS provider may not be able to apply filters or otherwise control access of the data plane VCN 618 to any outside networks or databases. Applying filters and controls by the customer onto the data plane VCN 618, contained in the customer tenancy 621, can help isolate the data plane VCN 618 from other customers and from public Internet 654.

In some embodiments, cloud services 656 can be called by the service gateway 636 to access services that may not exist on public Internet 654, on the control plane VCN 616, or on the data plane VCN 618. The connection between cloud services 656 and the control plane VCN 616 or the data plane VCN 618 may not be live or continuous. Cloud services 656 may exist on a different network owned or operated by the IaaS provider. Cloud services 656 may be configured to receive calls from the service gateway 636 and may be configured to not receive calls from public Internet 654. Some cloud services 656 may be isolated from other cloud services 656, and the control plane VCN 616 may be isolated from cloud services 656 that may not be in the same region as the control plane VCN 616. For example, the control plane VCN 616 may be located in "Region 1," and cloud service "Deployment 5," may be located in Region 1 and in "Region 2." If a call to Deployment 5 is made by the service gateway 636 contained in the control plane VCN 616 located in Region 1, the call may be transmitted to Deployment 5 in Region 1. In this example, the control plane VCN 616, or Deployment 5 in Region 1, may not be communicatively coupled to, or otherwise in communication with, Deployment 5 in Region 2.

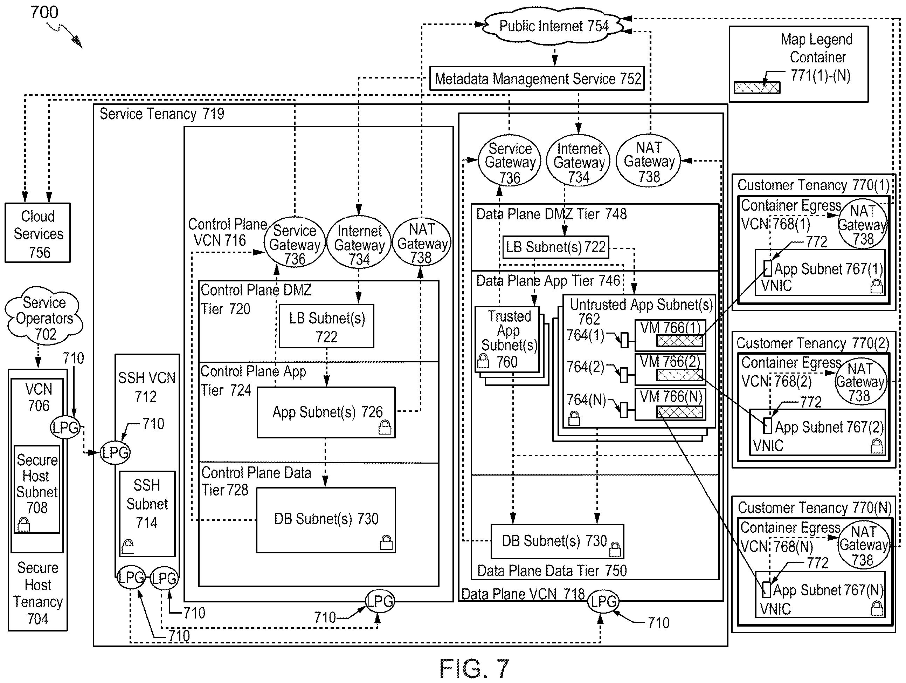

FIG. 7 is a block diagram 700 illustrating another example pattern of an IaaS architecture, according to at least one embodiment. Service operators 702 (e.g. service operators 502 of FIG. 5) can be communicatively coupled to a secure host tenancy 704 (e.g. the secure host tenancy 504 of FIG. 5) that can include a virtual cloud network (VCN) 706 (e.g. the VCN 506 of FIG. 5) and a secure host subnet 708 (e.g. the secure host subnet 508 of FIG. 5). The VCN 706 can include an LPG 710 (e.g. the LPG 510 of FIG. 5) that can be communicatively coupled to an SSH VCN 712 (e.g. the SSH VCN 512 of FIG. 5) via an LPG 710 contained in the SSH VCN 712. The SSH VCN 712 can include an SSH subnet 714 (e.g. the SSH subnet 514 of FIG. 5), and the SSH VCN 712 can be communicatively coupled to a control plane VCN 716 (e.g. the control plane VCN 516 of FIG. 5) via an LPG 710 contained in the control plane VCN 716 and to a data plane VCN 718 (e.g. the data plane 518 of FIG. 5) via an LPG 710 contained in the data plane VCN 718. The control plane VCN 716 and the data plane VCN 718 can be contained in a service tenancy 719 (e.g. the service tenancy 519 of FIG. 5).

The control plane VCN 716 can include a control plane DMZ tier 720 (e.g. the control plane DMZ tier 520 of FIG. 5) that can include load balancer (LB) subnet(s) 722 (e.g. LB subnet(s) 522 of FIG. 5), a control plane app tier 724 (e.g. the control plane app tier 524 of FIG. 5) that can include app subnet(s) 726 (e.g. similar to app subnet(s) 526 of FIG. 5), a control plane data tier 728 (e.g. the control plane data tier 528 of FIG. 5) that can include DB subnet(s) 730. The LB subnet(s) 722 contained in the control plane DMZ tier 720 can be communicatively coupled to the app subnet(s) 726 contained in the control plane app tier 724 and to an Internet gateway 734 (e.g. the Internet gateway 534 of FIG. 5) that can be contained in the control plane VCN 716, and the app subnet(s) 726 can be communicatively coupled to the DB subnet(s) 730 contained in the control plane data tier 728 and to a service gateway 736 (e.g. the service gateway of FIG. 5) and a network address translation (NAT) gateway 738 (e.g. the NAT gateway 538 of FIG. 5). The control plane VCN 716 can include the service gateway 736 and the NAT gateway 738.

The data plane VCN 718 can include a data plane app tier 746 (e.g. the data plane app tier 546 of FIG. 5), a data plane DMZ tier 748 (e.g. the data plane DMZ tier 548 of FIG. 5), and a data plane data tier 750 (e.g. the data plane data tier 550 of FIG. 5). The data plane DMZ tier 748 can include LB subnet(s) 722 that can be communicatively coupled to trusted app subnet(s) 760 and untrusted app subnet(s) 762 of the data plane app tier 746 and the Internet gateway 734 contained in the data plane VCN 718. The trusted app subnet(s) 760 can be communicatively coupled to the service gateway 736 contained in the data plane VCN 718, the NAT gateway 738 contained in the data plane VCN 718, and DB subnet(s) 730 contained in the data plane data tier 750. The untrusted app subnet(s) 762 can be communicatively coupled to the service gateway 736 contained in the data plane VCN 718 and DB subnet(s) 730 contained in the data plane data tier 750. The data plane data tier 750 can include DB subnet(s) 730 that can be communicatively coupled to the service gateway 736 contained in the data plane VCN 718.

The untrusted app subnet(s) 762 can include one or more primary VNICs 764(1)-(N) that can be communicatively coupled to tenant virtual machines (VMs) 766(1)-(N). Each tenant VM 766(1)-(N) can be communicatively coupled to a respective app subnet 767(1)-(N) that can be contained in respective container egress VCNs 768(1)-(N) that can be contained in respective customer tenancies 770(1)-(N). Respective secondary VNICs 772(1)-(N) can facilitate communication between the untrusted app subnet(s) 762 contained in the data plane VCN 718 and the app subnet contained in the container egress VCNs 768(1)-(N). Each container egress VCNs 768(1)-(N) can include a NAT gateway 738 that can be communicatively coupled to public Internet 754 (e.g. public Internet 554 of FIG. 5).

The Internet gateway 734 contained in the control plane VCN 716 and contained in the data plane VCN 718 can be communicatively coupled to a metadata management service 752 (e.g. the metadata management system 552 of FIG. 5) that can be communicatively coupled to public Internet 754. Public Internet 754 can be communicatively coupled to the NAT gateway 738 contained in the control plane VCN 716 and contained in the data plane VCN 718. The service gateway 736 contained in the control plane VCN 716 and contained in the data plane VCN 718 can be communicatively couple to cloud services 756.

In some embodiments, the data plane VCN 718 can be integrated with customer tenancies 770. This integration can be useful or desirable for customers of the IaaS provider in some cases such as a case that may desire support when executing code. The customer may provide code to run that may be destructive, may communicate with other customer resources, or may otherwise cause undesirable effects. In response to this, the IaaS provider may determine whether to run code given to the IaaS provider by the customer.

In some examples, the customer of the IaaS provider may grant temporary network access to the IaaS provider and request a function to be attached to the data plane tier app 746. Code to run the function may be executed in the VMs 766(1)-(N), and the code may not be configured to run anywhere else on the data plane VCN 718. Each VM 766(1)-(N) may be connected to one customer tenancy 770. Respective containers 771(1)-(N) contained in the VMs 766(1)-(N) may be configured to run the code. In this case, there can be a dual isolation (e.g., the containers 771(1)-(N) running code, where the containers 771(1)-(N) may be contained in at least the VM 766(1)-(N) that are contained in the untrusted app subnet(s) 762), which may help prevent incorrect or otherwise undesirable code from damaging the network of the IaaS provider or from damaging a network of a different customer. The containers 771(1)-(N) may be communicatively coupled to the customer tenancy 770 and may be configured to transmit or receive data from the customer tenancy 770. The containers 771(1)-(N) may not be configured to transmit or receive data from any other entity in the data plane VCN 718. Upon completion of running the code, the IaaS provider may kill or otherwise dispose of the containers 771(1)-(N).

In some embodiments, the trusted app subnet(s) 760 may run code that may be owned or operated by the IaaS provider. In this embodiment, the trusted app subnet(s) 760 may be communicatively coupled to the DB subnet(s) 730 and be configured to execute CRUD operations in the DB subnet(s) 730. The untrusted app subnet(s) 762 may be communicatively coupled to the DB subnet(s) 730, but in this embodiment, the untrusted app subnet(s) may be configured to execute read operations in the DB subnet(s) 730. The containers 771(1)-(N) that can be contained in the VM 766(1)-(N) of each customer and that may run code from the customer may not be communicatively coupled with the DB subnet(s) 730.

In other embodiments, the control plane VCN 716 and the data plane VCN 718 may not be directly communicatively coupled. In this embodiment, there may be no direct communication between the control plane VCN 716 and the data plane VCN 718. However, communication can occur indirectly through at least one method. An LPG 710 may be established by the IaaS provider that can facilitate communication between the control plane VCN 716 and the data plane VCN 718. In another example, the control plane VCN 716 or the data plane VCN 718 can make a call to cloud services 756 via the service gateway 736. For example, a call to cloud services 756 from the control plane VCN 716 can include a request for a service that can communicate with the data plane VCN 718.

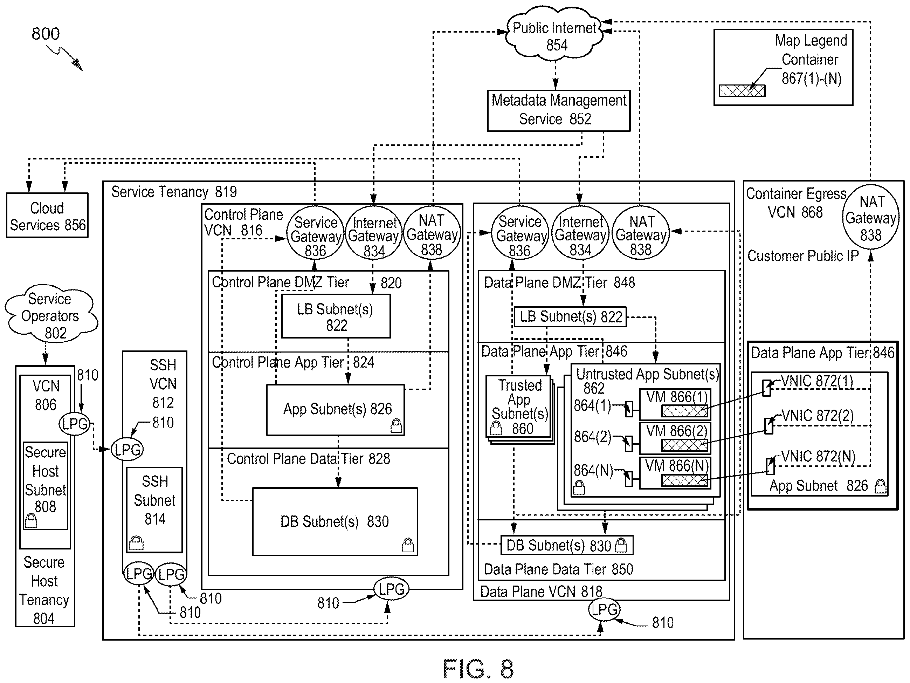

FIG. 8 is a block diagram 800 illustrating another example pattern of an IaaS architecture, according to at least one embodiment. Service operators 802 (e.g. service operators 502 of FIG. 5) can be communicatively coupled to a secure host tenancy 804 (e.g. the secure host tenancy 504 of FIG. 5) that can include a virtual cloud network (VCN) 806 (e.g. the VCN 506 of FIG. 5) and a secure host subnet 808 (e.g. the secure host subnet 508 of FIG. 5). The VCN 806 can include an LPG 810 (e.g. the LPG 510 of FIG. 5) that can be communicatively coupled to an SSH VCN 812 (e.g. the SSH VCN 512 of FIG. 5) via an LPG 810 contained in the SSH VCN 812. The SSH VCN 812 can include an SSH subnet 814 (e.g. the SSH subnet 514 of FIG. 5), and the SSH VCN 812 can be communicatively coupled to a control plane VCN 816 (e.g. the control plane VCN 516 of FIG. 5) via an LPG 810 contained in the control plane VCN 816 and to a data plane VCN 818 (e.g. the data plane 518 of FIG. 5) via an LPG 810 contained in the data plane VCN 818. The control plane VCN 816 and the data plane VCN 818 can be contained in a service tenancy 819 (e.g. the service tenancy 519 of FIG. 5).

The control plane VCN 816 can include a control plane DMZ tier 820 (e.g. the control plane DMZ tier 520 of FIG. 5) that can include LB subnet(s) 822 (e.g. LB subnet(s) 522 of FIG. 5), a control plane app tier 824 (e.g. the control plane app tier 524 of FIG. 5) that can include app subnet(s) 826 (e.g. app subnet(s) 526 of FIG. 5), a control plane data tier 828 (e.g. the control plane data tier 528 of FIG. 5) that can include DB subnet(s) 830 (e.g. DB subnet(s) 730 of FIG. 7). The LB subnet(s) 822 contained in the control plane DMZ tier 820 can be communicatively coupled to the app subnet(s) 826 contained in the control plane app tier 824 and to an Internet gateway 834 (e.g. the Internet gateway 534 of FIG. 5) that can be contained in the control plane VCN 816, and the app subnet(s) 826 can be communicatively coupled to the DB subnet(s) 830 contained in the control plane data tier 828 and to a service gateway 836 (e.g. the service gateway of FIG. 5) and a network address translation (NAT) gateway 838 (e.g. the NAT gateway 538 of FIG. 5). The control plane VCN 816 can include the service gateway 836 and the NAT gateway 838.

The data plane VCN 818 can include a data plane app tier 846 (e.g. the data plane app tier 546 of FIG. 5), a data plane DMZ tier 848 (e.g. the data plane DMZ tier 548 of FIG. 5), and a data plane data tier 850 (e.g. the data plane data tier 550 of FIG. 5). The data plane DMZ tier 848 can include LB subnet(s) 822 that can be communicatively coupled to trusted app subnet(s) 860 (e.g. trusted app subnet(s) 760 of FIG. 7) and untrusted app subnet(s) 862 (e.g. untrusted app subnet(s) 762 of FIG. 7) of the data plane app tier 846 and the Internet gateway 834 contained in the data plane VCN 818. The trusted app subnet(s) 860 can be communicatively coupled to the service gateway 836 contained in the data plane VCN 818, the NAT gateway 838 contained in the data plane VCN 818, and DB subnet(s) 830 contained in the data plane data tier 850. The untrusted app subnet(s) 862 can be communicatively coupled to the service gateway 836 contained in the data plane VCN 818 and DB subnet(s) 830 contained in the data plane data tier 850. The data plane data tier 850 can include DB subnet(s) 830 that can be communicatively coupled to the service gateway 836 contained in the data plane VCN 818.

The untrusted app subnet(s) 862 can include primary VNICs 864(1)-(N) that can be communicatively coupled to tenant virtual machines (VMs) 866(1)-(N) residing within the untrusted app subnet(s) 862. Each tenant VM 866(1)-(N) can run code in a respective container 867(1)-(N), and be communicatively coupled to an app subnet 826 that can be contained in a data plane app tier 846 that can be contained in a container egress VCN 868. Respective secondary VNICs 872(1)-(N) can facilitate communication between the untrusted app subnet(s) 862 contained in the data plane VCN 818 and the app subnet contained in the container egress VCN 868. The container egress VCN can include a NAT gateway 838 that can be communicatively coupled to public Internet 854 (e.g. public Internet 554 of FIG. 5).

The Internet gateway 834 contained in the control plane VCN 816 and contained in the data plane VCN 818 can be communicatively coupled to a metadata management service 852 (e.g. the metadata management system 552 of FIG. 5) that can be communicatively coupled to public Internet 854. Public Internet 854 can be communicatively coupled to the NAT gateway 838 contained in the control plane VCN 816 and contained in the data plane VCN 818. The service gateway 836 contained in the control plane VCN 816 and contained in the data plane VCN 818 can be communicatively couple to cloud services 856.

In some examples, the pattern illustrated by the architecture of block diagram 800 of FIG. 8 may be considered an exception to the pattern illustrated by the architecture of block diagram 700 of FIG. 7 and may be desirable for a customer of the IaaS provider if the IaaS provider cannot directly communicate with the customer (e.g., a disconnected region). The respective containers 867(1)-(N) that are contained in the VMs 866(1)-(N) for each customer can be accessed in real-time by the customer. The containers 867(1)-(N) may be configured to make calls to respective secondary VNICs 872(1)-(N) contained in app subnet(s) 826 of the data plane app tier 846 that can be contained in the container egress VCN 868. The secondary VNICs 872(1)-(N) can transmit the calls to the NAT gateway 838 that may transmit the calls to public Internet 854. In this example, the containers 867(1)-(N) that can be accessed in real-time by the customer can be isolated from the control plane VCN 816 and can be isolated from other entities contained in the data plane VCN 818. The containers 867(1)-(N) may also be isolated from resources from other customers.

In other examples, the customer can use the containers 867(1)-(N) to call cloud services 856. In this example, the customer may run code in the containers 867(1)-(N) that requests a service from cloud services 856. The containers 867(1)-(N) can transmit this request to the secondary VNICs 872(1)-(N) that can transmit the request to the NAT gateway that can transmit the request to public Internet 854. Public Internet 854 can transmit the request to LB subnet(s) 822 contained in the control plane VCN 816 via the Internet gateway 834. In response to determining the request is valid, the LB subnet(s) can transmit the request to app subnet(s) 826 that can transmit the request to cloud services 856 via the service gateway 836.

It should be appreciated that IaaS architectures 500, 600, 700, 800 depicted in the figures may have other components than those depicted. Further, the embodiments shown in the figures are only some examples of a cloud infrastructure system that may incorporate an embodiment of the disclosure. In some other embodiments, the IaaS systems may have more or fewer components than shown in the figures, may combine two or more components, or may have a different configuration or arrangement of components.

In certain embodiments, the IaaS systems described herein may include a suite of applications, middleware, and database service offerings that are delivered to a customer in a self-service, subscription-based, elastically scalable, reliable, highly available, and secure manner. An example of such an IaaS system is the Oracle Cloud Infrastructure (OCI) provided by the present assignee.

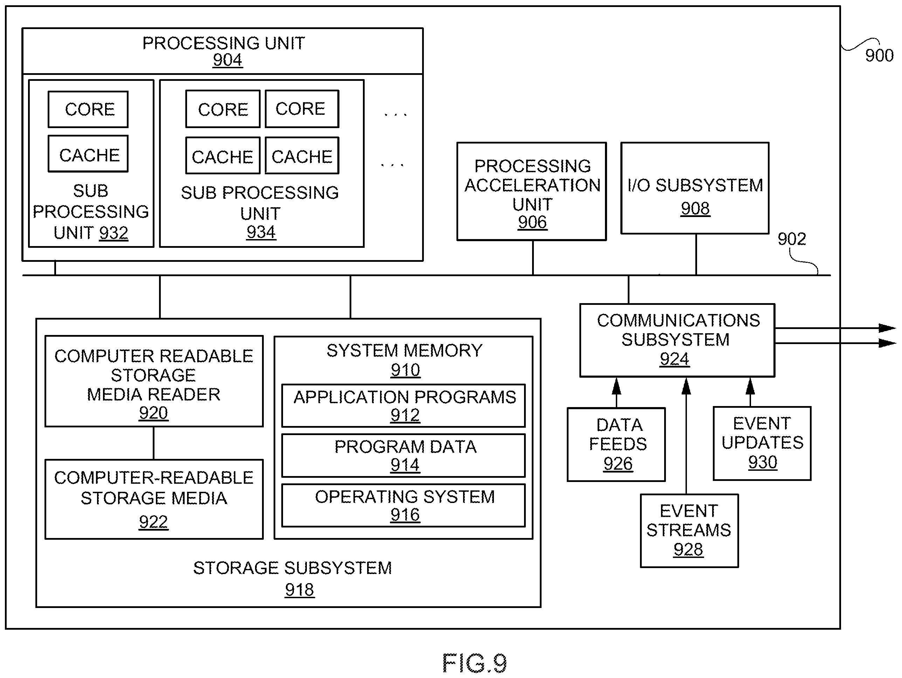

FIG. 9 illustrates an example computer system 900, in which various embodiments may be implemented. The system 900 may be used to implement any of the computer systems described above. As shown in the figure, computer system 900 includes a processing unit 904 that communicates with a number of peripheral subsystems via a bus subsystem 902. These peripheral subsystems may include a processing acceleration unit 906, an I/O subsystem 908, a storage subsystem 918 and a communications subsystem 924. Storage subsystem 918 includes tangible computer-readable storage media 922 and a system memory 910.

Bus subsystem 902 provides a mechanism for letting the various components and subsystems of computer system 900 communicate with each other as intended. Although bus subsystem 902 is shown schematically as a single bus, alternative embodiments of the bus subsystem may utilize multiple buses. Bus subsystem 902 may be any of several types of bus structures including a memory bus or memory controller, a peripheral bus, and a local bus using any of a variety of bus architectures. For example, such architectures may include an Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus, which can be implemented as a Mezzanine bus manufactured to the IEEE P1386.1 standard.

Processing unit 904, which can be implemented as one or more integrated circuits (e.g., a conventional microprocessor or microcontroller), controls the operation of computer system 900. One or more processors may be included in processing unit 904. These processors may include single core or multicore processors. In certain embodiments, processing unit 904 may be implemented as one or more independent processing units 932 and/or 934 with single or multicore processors included in each processing unit. In other embodiments, processing unit 904 may also be implemented as a quad-core processing unit formed by integrating two dual-core processors into a single chip.

In various embodiments, processing unit 904 can execute a variety of programs in response to program code and can maintain multiple concurrently executing programs or processes. At any given time, some or all of the program code to be executed can be resident in processor(s) 904 and/or in storage subsystem 918. Through suitable programming, processor(s) 904 can provide various functionalities described above. Computer system 900 may additionally include a processing acceleration unit 906, which can include a digital signal processor (DSP), a special-purpose processor, and/or the like.

I/O subsystem 908 may include user interface input devices and user interface output devices. User interface input devices may include a keyboard, pointing devices such as a mouse or trackball, a touchpad or touch screen incorporated into a display, a scroll wheel, a click wheel, a dial, a button, a switch, a keypad, audio input devices with voice command recognition systems, microphones, and other types of input devices. User interface input devices may include, for example, motion sensing and/or gesture recognition devices such as the Microsoft Kinect^{®} motion sensor that enables users to control and interact with an input device, such as the Microsoft Xbox^{®} 360 game controller, through a natural user interface using gestures and spoken commands. User interface input devices may also include eye gesture recognition devices such as the Google Glass^{®} blink detector that detects eye activity (e.g., 'blinking' while taking pictures and/or making a menu selection) from users and transforms the eye gestures as input into an input device (e.g., Google Glass^{®}). Additionally, user interface input devices may include voice recognition sensing devices that enable users to interact with voice recognition systems (e.g., Siri^{®} navigator), through voice commands.

User interface input devices may also include, without limitation, three dimensional (3D) mice, joysticks or pointing sticks, gamepads and graphic tablets, and audio/visual devices such as speakers, digital cameras, digital camcorders, portable media players, webcams, image scanners, fingerprint scanners, barcode reader 3D scanners, 3D printers, laser rangefinders, and eye gaze tracking devices. Additionally, user interface input devices may include, for example, medical imaging input devices such as computed tomography, magnetic resonance imaging, position emission tomography, medical ultrasonography devices. User interface input devices may also include, for example, audio input devices such as MIDI keyboards, digital musical instruments and the like.

User interface output devices may include a display subsystem, indicator lights, or non-visual displays such as audio output devices, etc. The display subsystem may be a cathode ray tube (CRT), a flat-panel device, such as that using a liquid crystal display (LCD) or plasma display, a projection device, a touch screen, and the like. In general, use of the term "output device" is intended to include all possible types of devices and mechanisms for outputting information from computer system 900 to a user or other computer. For example, user interface output devices may include, without limitation, a variety of display devices that visually convey text, graphics and audio/video information such as monitors, printers, speakers, headphones, automotive navigation systems, plotters, voice output devices, and modems.

Computer system 900 may comprise a storage subsystem 918 that comprises software elements, shown as being currently located within a system memory 910. System memory 910 may store program instructions that are loadable and executable on processing unit 904, as well as data generated during the execution of these programs.

Depending on the configuration and type of computer system 900, system memory 910 may be volatile (such as random access memory (RAM)) and/or non-volatile (such as read-only memory (ROM), flash memory, etc.) The RAM typically contains data and/or program modules that are immediately accessible to and/or presently being operated and executed by processing unit 904. In some implementations, system memory 910 may include multiple different types of memory, such as static random access memory (SRAM) or dynamic random access memory (DRAM). In some implementations, a basic input/output system (BIOS), containing the basic routines that help to transfer information between elements within computer system 900, such as during start-up, may typically be stored in the ROM. By way of example, and not limitation, system memory 910 also illustrates application programs 912, which may include client applications, Web browsers, mid-tier applications, relational database management systems (RDBMS), etc., program data 914, and an operating system 916. By way of example, operating system 916 may include various versions of Microsoft Windows^{®}, Apple Macintosh^{®}, and/or Linux operating systems, a variety of commercially-available UNIX^{®} or UNIX-like operating systems (including without limitation the variety of GNU/Linux operating systems, the Google Chromed OS, and the like) and/or mobile operating systems such as iOS, Windows^{®} Phone, Android^{®} OS, BlackBerry^{®} 9 OS, and Palm^{®} OS operating systems.

Storage subsystem 918 may also provide a tangible computer-readable storage medium for storing the basic programming and data constructs that provide the functionality of some embodiments. Software (programs, code modules, instructions) that when executed by a processor provide the functionality described above may be stored in storage subsystem 918. These software modules or instructions may be executed by processing unit 904. Storage subsystem 918 may also provide a repository for storing data used in accordance with the present disclosure.

Storage subsystem 900 may also include a computer-readable storage media reader 920 that can further be connected to computer-readable storage media 922. Together and, optionally, in combination with system memory 910, computer-readable storage media 922 may comprehensively represent remote, local, fixed, and/or removable storage devices plus storage media for temporarily and/or more permanently containing, storing, transmitting, and retrieving computer-readable information.

Computer-readable storage media 922 containing code, or portions of code, can also include any appropriate media known or used in the art, including storage media and communication media, such as but not limited to, volatile and non-volatile, removable and non-removable media implemented in any method or technology for storage and/or transmission of information. This can include tangible computer-readable storage media such as RAM, ROM, electronically erasable programmable ROM (EEPROM), flash memory or other memory technology, CD-ROM, digital versatile disk (DVD), or other optical storage, magnetic cassettes, magnetic tape, magnetic disk storage or other magnetic storage devices, or other tangible computer readable media. This can also include nontangible computer-readable media, such as data signals, data transmissions, or any other medium which can be used to transmit the desired information and which can be accessed by computing system 900.

By way of example, computer-readable storage media 922 may include a hard disk drive that reads from or writes to non-removable, nonvolatile magnetic media, a magnetic disk drive that reads from or writes to a removable, nonvolatile magnetic disk, and an optical disk drive that reads from or writes to a removable, nonvolatile optical disk such as a CD ROM, DVD, and Blu-Ray^{®} disk, or other optical media. Computer-readable storage media 922 may include, but is not limited to, Zip^{®} drives, flash memory cards, universal serial bus (USB) flash drives, secure digital (SD) cards, DVD disks, digital video tape, and the like. Computer-readable storage media 922 may also include, solid-state drives (SSD) based on non-volatile memory such as flash-memory based SSDs, enterprise flash drives, solid state ROM, and the like, SSDs based on volatile memory such as solid state RAM, dynamic RAM, static RAM, DRAM-based SSDs, magnetoresistive RAM (MRAM) SSDs, and hybrid SSDs that use a combination of DRAM and flash memory based SSDs. The disk drives and their associated computer-readable media may provide non-volatile storage of computer-readable instructions, data structures, program modules, and other data for computer system 900.

Communications subsystem 924 provides an interface to other computer systems and networks. Communications subsystem 924 serves as an interface for receiving data from and transmitting data to other systems from computer system 900. For example, communications subsystem 924 may enable computer system 900 to connect to one or more devices via the Internet. In some embodiments communications subsystem 924 can include radio frequency (RF) transceiver components for accessing wireless voice and/or data networks (e.g., using cellular telephone technology, advanced data network technology, such as 3G, 4G or EDGE (enhanced data rates for global evolution), WiFi (IEEE 802.11 family standards, or other mobile communication technologies, or any combination thereof), global positioning system (GPS) receiver components, and/or other components. In some embodiments communications subsystem 924 can provide wired network connectivity (e.g., Ethernet) in addition to or instead of a wireless interface.

In some embodiments, communications subsystem 924 may also receive input communication in the form of structured and/or unstructured data feeds 926, event streams 928, event updates 930, and the like on behalf of one or more users who may use computer system 900.

By way of example, communications subsystem 924 may be configured to receive data feeds 926 in real-time from users of social networks and/or other communication services such as Twitter^{®} feeds, Facebook^{®} updates, web feeds such as Rich Site Summary (RSS) feeds, and/or real-time updates from one or more third party information sources.

Additionally, communications subsystem 924 may also be configured to receive data in the form of continuous data streams, which may include event streams 928 of real-time events and/or event updates 930, that may be continuous or unbounded in nature with no explicit end. Examples of applications that generate continuous data may include, for example, sensor data applications, financial tickers, network performance measuring tools (e.g. network monitoring and traffic management applications), clickstream analysis tools, automobile traffic monitoring, and the like.

Communications subsystem 924 may also be configured to output the structured and/or unstructured data feeds 926, event streams 928, event updates 930, and the like to one or more databases that may be in communication with one or more streaming data source computers coupled to computer system 900.

Computer system 900 can be one of various types, including a handheld portable device (e.g., an iPhone^{®} cellular phone, an iPad^{®} computing tablet, a PDA), a wearable device (e.g., a Google Glass^{®} head mounted display), a PC, a workstation, a mainframe, a kiosk, a server rack, or any other data processing system.

Due to the ever-changing nature of computers and networks, the description of computer system 900 depicted in the figure is intended only as a specific example. Many other configurations having more or fewer components than the system depicted in the figure are possible. For example, customized hardware might also be used and/or particular elements might be implemented in hardware, firmware, software (including applets), or a combination. Further, connection to other computing devices, such as network input/output devices, may be employed. Based on the disclosure and teachings provided herein, a person of ordinary skill in the art will appreciate other ways and/or methods to implement the various embodiments.

## Claims

1. A method comprising:
obtaining (305), by a response system of a security architecture, a problem detected within a signal from an emitter associated with a user, wherein the problem is a security incident;
inferring (310) a first response, using a global model implemented as part of the response system that takes as input the problem, wherein the global model comprises a global set of model parameters learned from mappings between problems and responses globally with respect to preferences of all users using the security architecture;
inferring (315) a second response, using a local model implemented as part of the response system that takes as input the problem, wherein the local model comprises a local set of model parameters learned from mappings between problems and responses locally with respect to preferences of the user;
evaluating (325), by the response system, the first response and the second response using criteria comprising: (i) a confidence score associated with each of the first response and the second response, and (ii) a weight associated with each of the global model and the local model;
determining (330), by the response system, a final response for the problem based on the evaluation of the first response and the second response; and
selecting (335), by the response system, a responder from a set of responders based on the final response, wherein the responder is adapted to take one or more actions to respond to the problem, wherein the method further comprising:
prior to selecting the responder, evaluating (435), using the response system, the final response for accuracy, wherein the accuracy is evaluated based on a comparison between the final response and a groundtruth response that the user would prefer for the problem, and the accuracy of the final response is determined to be acceptable when the final response aligns with the groundtruth response based on the comparison or is determined to be unacceptable when the final response does not align with the groundtruth response based on the comparison;
responsive to the accuracy being determined to be unacceptable:
generating (440) a label for the problem, wherein the label comprises the groundtruth response;
storing (440) the label comprising the ground truth and the problem in a local data store; and
selecting (475) the responder from the set of responders based on the groundtruth rather than the final response; and
responsive to the accuracy being determined to be acceptable:
generating (460) a label for the problem, wherein the label comprises the final response;
storing (460) the label comprising the final response and the problem in the local data store and the global data store; and
selecting (475) the responder from the set of responders based on the final response.

2. The method of claim 1, further comprising:
responsive to the accuracy being determined to be unacceptable:
storing the label comprising the ground truth and problem in a general data store or placing the label comprising the ground truth and the problem in a data queue for evaluation by an administrator;
receiving a response from the administrator to either take no action with the respect to the label comprising the ground truth and the problem or to train the global model using the label comprising the ground truth and the problem;
responsive to response being to take no action, removing the label comprising the ground truth and the problem from the data store or the data queue; and
responsive to the response being to train the global model, storing the label comprising the ground truth and the problem in the global repository.

3. The method of claim 1, further comprising:
training the global model with global training data from the global repository, wherein the global training data includes the label comprising the final response and the problem; and
training the local model with local training data from the local repository, wherein the local training data includes the label comprising the final response and the problem.

4. The method of claim 1, further comprising training the local model with local training data from the local repository, wherein the local training data includes the label comprising the groundtruth response and the problem.

5. The method of claim 2, further comprising:
training the global model with global training data from the global repository, wherein the global training data includes the label comprising the groundtruth response and the problem; and
training the local model with local training data from the local repository, wherein the local training data includes the label comprising the groundtruth response and the problem.

6. The method of claim 1, further comprising performing, by the response system, the one or more actions to respond to the problem.

7. A non-transitory computer-readable memory (922) storing a plurality of instructions executable by one or more processors (904), the plurality of instructions comprising instructions that when executed by the one or more processors (904) cause the one or more processors (904) to perform processing comprising:
obtaining (305), by a response system of a security architecture, a problem detected within a signal from an emitter associated with a user, wherein the problem is a security incident;
inferring (310) a first response, using a global model implemented as part of the response system that takes as input the problem, wherein the global model comprises a global set of model parameters learned from mappings between problems and responses globally with respect to preferences of all users using the security architecture;
inferring (315) a second response, using a local model implemented as part of the response system that takes as input the problem, wherein the local model comprises a local set of model parameters learned from mappings between problems and responses locally with respect to preferences of the user;
evaluating (325), by the response system, the first response and the second response using criteria comprising: (i) a confidence score associated with each of the first response and the second response, and (ii) a weight associated with each of the global model and the local model;
determining (330), by the response system, a final response for the problem based on the evaluation of the first response and the second response; and
selecting (335), by the response system, a responder from a set of responders based on the final response, wherein the responder is adapted to take one or more actions to respond to the problem,
wherein the processing further comprises:
prior to selecting the responder, evaluating (425), using the response system, the final response for accuracy, wherein the accuracy is evaluated based on a comparison between the final response and a groundtruth response that the user would prefer for the problem, and the accuracy of the final response is determined to be acceptable when the final response aligns with the groundtruth response based on the comparison or is determined to be unacceptable when the final response does not align with the groundtruth response based on the comparison;
responsive to the accuracy being determined to be unacceptable:
generating (440) a label for the problem, wherein the label comprises the groundtruth response;
storing (440) the label comprising the ground truth and the problem in a local data store; and
selecting (475) the responder from the set of responders based on the groundtruth rather than the final response; and
responsive to the accuracy being determined to be acceptable:
generating (460) a label for the problem, wherein the label comprises the final response;
storing (460) the label comprising the final response and the problem in the local data store and the global data store; and
selecting (475) the responder from the set of responders based on the final response.

8. The non-transitory computer-readable memory of claim 7, wherein the processing further comprises:
responsive to the accuracy being determined to be unacceptable:
storing the label comprising the ground truth and problem in a general data store or placing the label comprising the ground truth and the problem in a data queue for evaluation by an administrator;
receiving a response from the administrator to either take no action with the respect to the label comprising the ground truth and the problem or to train the global model using the label comprising the ground truth and the problem;
responsive to response being to take no action, removing the label comprising the ground truth and the problem from the data store or the data queue; and
responsive to the response being to train the global model, storing the label comprising the ground truth and the problem in the global repository.

9. The non-transitory computer-readable memory of claim 7, wherein the processing further comprises:
training the global model with global training data from the global repository, wherein the global training data includes the label comprising the final response and the problem; and
training the local model with local training data from the local repository, wherein the local training data includes the label comprising the final response and the problem.

10. The non-transitory computer-readable memory of claim 7, wherein the processing further comprises training the local model with local training data from the local repository, wherein the local training data includes the label comprising the groundtruth response and the problem.

11. The non-transitory computer-readable memory of claim 8, wherein the processing further comprises:
training the global model with global training data from the global repository, wherein the global training data includes the label comprising the groundtruth response and the problem; and
training the local model with local training data from the local repository, wherein the local training data includes the label comprising the groundtruth response and the problem.

12. The non-transitory computer-readable memory of claim 7, wherein the processing further comprises performing, by the response system, the one or more actions to respond to the problem.

13. A system comprising:
one or more processors (904); and
a memory (910) coupled to the one or more processors (904), the memory (910) storing a plurality of instructions executable by the one or more processors (904), the plurality of instructions comprising instructions that when executed by the one or more processors (904) cause the one or more processors (904) to perform the method of any one of claims 1-6.

## Patentansprüche

1. Verfahren, das Folgendes umfasst:
Erhalten (305), durch ein Reaktionssystem einer Sicherheitsarchitektur, eines Problems, das innerhalb eines Signals von einem Sender erfasst wird, der einem Benutzer zugeordnet ist, wobei das Problem ein Sicherheitsvorfall ist;
Ableiten (310) einer ersten Antwort unter Verwendung eines globalen Modells, das als Teil des Antwortsystems implementiert ist, das das Problem als Eingabe nimmt, wobei das globale Modell einen globalen Satz von Modellparametern umfasst, die aus Zuordnungen zwischen Problemen und Antworten global in Bezug auf die Präferenzen aller Benutzer, die die Sicherheitsarchitektur verwenden, gelernt wurden;
Ableiten (315) einer zweiten Antwort unter Verwendung eines lokalen Modells, das als Teil des Antwortsystems implementiert ist, das das Problem als Eingabe nimmt, wobei das lokale Modell einen lokalen Satz von Modellparametern umfasst, die aus Zuordnungen zwischen Problemen und Antworten lokal in Bezug auf die Präferenzen des Benutzers gelernt wurden;
Bewerten (325), durch das Antwortsystem, der ersten Antwort und der zweiten Antwort unter Verwendung von Kriterien, umfassend: (i) einen Konfidenzwert, der jeweils der ersten Antwort und der zweiten Antwort zugeordnet ist, und (ii) eine Gewichtung, die jeweils dem globalen Modell und dem lokalen Modell zugeordnet ist;
Bestimmen (330), durch das Antwortsystem, einer endgültigen Antwort für das Problem basierend auf der Bewertung der ersten Antwort und der zweiten Antwort; und
Auswählen (335) eines Responders aus einem Satz von Respondern durch das Antwortsystem basierend auf der endgültigen Antwort, wobei der Responder dafür ausgelegt ist, eine oder mehrere Aktionen zu unternehmen, um auf das Problem zu reagieren, wobei das Verfahren ferner Folgendes umfasst:
vor der Auswahl des Responders, Bewerten (435) der endgültigen Antwort unter Verwendung des Antwortsystems auf Genauigkeit, wobei die Genauigkeit basierend auf einem Vergleich zwischen der endgültigen Antwort und einer Grundwahrheitsantwort, die der Benutzer für das Problem bevorzugen würde, bewertet wird, und die Genauigkeit der endgültigen Antwort als annehmbar bestimmt wird, wenn die endgültige Antwort basierend auf dem Vergleich mit der Grundwahrheitsantwort übereinstimmt, oder als inakzeptabel bestimmt wird, wenn die endgültige Antwort basierend auf dem Vergleich nicht mit der Grundwahrheitsantwort übereinstimmt;
als Reaktion darauf, dass die Genauigkeit als inakzeptabel bestimmt wurde:
Erzeugen (440) eines Etiketts für das Problem, wobei das Etikett die Grundwahrheitsantwort umfasst;
Speichern (440) des Etiketts, das die Grundwahrheit und das Problem umfasst, in einem lokalen Datenspeicher; und
Auswählen (475) des Responders aus der Menge der Responder basierend auf der Grundwahrheit und nicht auf der endgültigen Antwort; und
als Reaktion darauf, dass die Genauigkeit als inakzeptabel bestimmt wurde:
Erzeugen (460) eines Etiketts für das Problem, wobei das Etikett die endgültige Antwort umfasst;
Speichern (460) des Etiketts, das die endgültige Antwort und das Problem umfasst, in dem lokalen Datenspeicher und dem globalen Datenspeicher; und
Auswählen (475) des Responders aus der Menge der Responder basierend auf der endgültigen Antwort.

2. Verfahren nach Anspruch 1, das ferner Folgendes umfasst:
als Reaktion darauf, dass die Genauigkeit als inakzeptabel bestimmt wurde:
Speichern des Etiketts, das die Grundwahrheit und das Problem umfasst, in einem allgemeinen Datenspeicher oder Platzieren des Etiketts, das die Grundwahrheit und das Problem umfasst, in einer Datenwarteschlange zur Auswertung durch einen Admini strator;
Empfangen einer Antwort von dem Administrator, entweder keine Aktion in Bezug auf das Etikett, das die Grundwahrheit und das Problem umfasst, durchzuführen oder das globale Modell unter Verwendung des Etiketts, das die Grundwahrheit und das Problem umfasst, zu trainieren;
als Reaktion auf die Antwort, keine Aktion zu unternehmen, Entfernen des die Grundwahrheit und das Problem umfassenden Etiketts aus dem Datenspeicher oder der Datenwarteschlange; und
als Reaktion auf die Antwort, das globale Modell zu trainieren, das Etikett, das die Grundwahrheit und das Problem umfasst, in dem globalen Repository zu speichern.

3. Verfahren nach Anspruch 1, das ferner Folgendes umfasst:
Trainieren des globalen Modells mit globalen Trainingsdaten aus dem globalen Repository, wobei die globalen Trainingsdaten das Etikett umfassen, das die endgültige Antwort und das Problem enthält; und
Trainieren des lokalen Modells mit lokalen Trainingsdaten aus dem lokalen Repository, wobei die lokalen Trainingsdaten das Etikett enthalten, das die endgültige Antwort und das Problem umfasst.

4. Verfahren nach Anspruch 1, das ferner das Trainieren des lokalen Modells mit lokalen Trainingsdaten aus dem lokalen Repository umfasst, wobei die lokalen Trainingsdaten das Etikett enthalten, das die Grundwahrheitsantwort und das Problem umfasst.

5. Verfahren nach Anspruch 2, das ferner Folgendes umfasst:
Trainieren des globalen Modells mit globalen Trainingsdaten aus dem globalen Repository, wobei die globalen Trainingsdaten das Etikett enthalten, das die Grundwahrheitsantwort und das Problem umfasst; und
Trainieren des lokalen Modells mit lokalen Trainingsdaten aus dem lokalen Repository, wobei die lokalen Trainingsdaten das Etikett enthalten, das die Grundwahrheitsantwort und das Problem umfasst.

6. Verfahren nach Anspruch 1, das ferner die Durchführung der einen oder mehreren Aktionen durch das Antwortsystem umfasst, um auf das Problem zu reagieren.

7. Nicht-übertragbarer computerlesbarer Speicher (922), der eine Vielzahl von Anweisungen speichert, die von einem oder mehreren Prozessoren (904) ausgeführt werden können, wobei die Vielzahl von Anweisungen Anweisungen umfasst, die, wenn sie von dem einen oder den mehreren Prozessoren (904) ausgeführt werden, den einen oder die mehreren Prozessoren (904) veranlassen, eine Verarbeitung durchzuführen, die Folgendes umfasst:
Erhalten (305), durch ein Reaktionssystem einer Sicherheitsarchitektur, eines Problems, das innerhalb eines Signals von einem Sender erfasst wird, der einem Benutzer zugeordnet ist, wobei das Problem ein Sicherheitsvorfall ist;
Ableiten (310) einer ersten Antwort unter Verwendung eines globalen Modells, das als Teil des Antwortsystems implementiert ist, das das Problem als Eingabe nimmt, wobei das globale Modell einen globalen Satz von Modellparametern umfasst, die aus Zuordnungen zwischen Problemen und Antworten global in Bezug auf die Präferenzen aller Benutzer, die die Sicherheitsarchitektur verwenden, gelernt wurden;
Ableiten (315) einer zweiten Antwort unter Verwendung eines lokalen Modells, das als Teil des Antwortsystems implementiert ist, das das Problem als Eingabe nimmt, wobei das lokale Modell einen lokalen Satz von Modellparametern umfasst, die aus Zuordnungen zwischen Problemen und Antworten lokal in Bezug auf die Präferenzen des Benutzers gelernt wurden;
Bewerten (325), durch das Antwortsystem, der ersten Antwort und der zweiten Antwort unter Verwendung von Kriterien, umfassend: (i) einen Konfidenzwert, der jeweils der ersten Antwort und der zweiten Antwort zugeordnet ist, und (ii) eine Gewichtung, die jeweils dem globalen Modell und dem lokalen Modell zugeordnet ist;
Bestimmen (330), durch das Antwortsystem, einer endgültigen Antwort für das Problem basierend auf der Bewertung der ersten Antwort und der zweiten Antwort; und
Auswählen (335) eines Responders aus einem Satz von Respondern durch das Antwortsystem basierend auf der endgültigen Antwort, wobei der Responder dafür ausgelegt ist, eine oder mehrere Aktionen zu unternehmen, um auf das Problem zu reagieren,
wobei die Verarbeitung ferner Folgendes umfasst:
vor der Auswahl des Responders, Bewerten (425) der endgültigen Antwort unter Verwendung des Antwortsystems auf Genauigkeit, wobei die Genauigkeit basierend auf einem Vergleich zwischen der endgültigen Antwort und einer Grundwahrheitsantwort, die der Benutzer für das Problem bevorzugen würde, bewertet wird, und die Genauigkeit der endgültigen Antwort als annehmbar bestimmt wird, wenn die endgültige Antwort basierend auf dem Vergleich mit der Grundwahrheitsantwort übereinstimmt, oder als inakzeptabel bestimmt wird, wenn die endgültige Antwort basierend auf dem Vergleich nicht mit der Grundwahrheitsantwort übereinstimmt;
als Reaktion darauf, dass die Genauigkeit als inakzeptabel bestimmt wurde:
Erzeugen (440) eines Etiketts für das Problem, wobei das Etikett die Grundwahrheitsantwort umfasst;
Speichern (440) des Etiketts, das die Grundwahrheit und das Problem umfasst, in einem lokalen Datenspeicher; und
Auswählen (475) des Responders aus der Menge der Responder basierend auf der Grundwahrheit und nicht auf der endgültigen Antwort; und
als Reaktion darauf, dass die Genauigkeit als inakzeptabel bestimmt wurde:
Erzeugen (460) eines Etiketts für das Problem, wobei das Etikett die endgültige Antwort umfasst;
Speichern (460) des Etiketts, das die endgültige Antwort und das Problem umfasst, in dem lokalen Datenspeicher und dem globalen Datenspeicher; und
Auswählen (475) des Responders aus der Menge der Responder basierend auf der endgültigen Antwort.

8. Nicht-übertragbarer computerlesbarer Speicher nach Anspruch 7, wobei die Verarbeitung ferner Folgendes umfasst:
als Reaktion darauf, dass die Genauigkeit als inakzeptabel bestimmt wurde:
Speichern des Etiketts, das die Grundwahrheit und das Problem umfasst, in einem allgemeinen Datenspeicher oder Platzieren des Etiketts, das die Grundwahrheit und das Problem umfasst, in einer Datenwarteschlange zur Auswertung durch einen Admini strator;
Empfangen einer Antwort von dem Administrator, entweder keine Aktion in Bezug auf das Etikett, das die Grundwahrheit und das Problem umfasst, durchzuführen oder das globale Modell unter Verwendung des Etiketts, das die Grundwahrheit und das Problem umfasst, zu trainieren;
als Reaktion auf die Antwort, keine Aktion zu unternehmen, Entfernen des die Grundwahrheit und das Problem umfassenden Etiketts aus dem Datenspeicher oder der Datenwarteschlange; und
als Reaktion auf die Antwort, das globale Modell zu trainieren, das Etikett, das die Grundwahrheit und das Problem umfasst, in dem globalen Repository zu speichern.

9. Nicht-übertragbarer computerlesbarer Speicher nach Anspruch 7, wobei die Verarbeitung ferner Folgendes umfasst:
Trainieren des globalen Modells mit globalen Trainingsdaten aus dem globalen Repository, wobei die globalen Trainingsdaten das Etikett umfassen, das die endgültige Antwort und das Problem enthält; und
Trainieren des lokalen Modells mit lokalen Trainingsdaten aus dem lokalen Repository, wobei die lokalen Trainingsdaten das Etikett enthalten, das die endgültige Antwort und das Problem umfasst.

10. Nicht-übertragbarer computerlesbarer Speicher nach Anspruch 7, wobei die Verarbeitung ferner das Trainieren des lokalen Modells mit lokalen Trainingsdaten aus dem lokalen Repository umfasst, wobei die lokalen Trainingsdaten das Etikett enthalten, das die Grundwahrheitsantwort und das Problem umfasst.

11. Nicht-übertragbarer computerlesbarer Speicher nach Anspruch 8, wobei die Verarbeitung ferner Folgendes umfasst:
Trainieren des globalen Modells mit globalen Trainingsdaten aus dem globalen Repository, wobei die globalen Trainingsdaten das Etikett enthalten, das die Grundwahrheitsantwort und das Problem umfasst; und
Trainieren des lokalen Modells mit lokalen Trainingsdaten aus dem lokalen Repository, wobei die lokalen Trainingsdaten das Etikett enthalten, das die Grundwahrheitsantwort und das Problem umfasst.

12. Nicht-übertragbarer computerlesbarer Speicher nach Anspruch 7, wobei die Verarbeitung ferner die Durchführung der einen oder mehreren Aktionen durch das Antwortsystem umfasst, um auf das Problem zu reagieren.

13. System, das Folgendes umfasst:
einen oder mehrere Prozessoren (904); und
einen Speicher (910), der mit dem einen oder den mehreren Prozessoren (904) gekoppelt ist, wobei der Speicher (910) eine Vielzahl von Anweisungen speichert, die von dem einen oder den mehreren Prozessoren (904) ausgeführt werden können, wobei die Vielzahl von Befehlen Befehle umfasst, die, wenn sie von dem einen oder den mehreren Prozessoren (904) ausgeführt werden, den einen oder die mehreren Prozessoren (904) veranlassen, das Verfahren nach einem der Ansprüche 1-6 durchzuführen.

## Revendications

1. Procédé, comportant les étapes consistant à :
obtenir (305), par un système de réponse d'une architecture de sécurité, un problème détecté dans un signal en provenance d'un émetteur associé à un utilisateur, dans lequel le problème est un incident de sécurité ;
déduire (310) une première réponse, au moyen d'un modèle global mis en œuvre comme faisant partie du système de réponse qui prend comme entrée le problème, dans lequel le modèle global comporte un ensemble global de paramètres de modèle appris à partir de mappages entre des problèmes et des réponses globalement par rapport aux préférences de tous les utilisateurs qui utilisent l'architecture de sécurité ;
déduire (315) une deuxième réponse, au moyen d'un modèle local mis en œuvre comme faisant partie du système de réponse qui prend comme entrée le problème, dans lequel le modèle local comporte un ensemble local de paramètres de modèle appris à partir de mappages entre des problèmes et des réponses localement par rapport aux préférences de l'utilisateur ;
évaluer (325), par le système de réponse, la première réponse et la deuxième réponse au moyen de critères comportant : (i) une note de confiance associée à chacune parmi la première réponse et la deuxième réponse, et (ii) une valeur de pondération associée à chacun parmi le modèle global et le modèle local ;
déterminer (330), par le système de réponse, une réponse finale pour le problème sur la base de l'évaluation de la première réponse et de la deuxième réponse ; et
sélectionner (335), par le système de réponse, un répondeur parmi un ensemble de répondeurs sur la base de la réponse finale, dans lequel le répondeur est adapté pour prendre une ou plusieurs mesures pour répondre au problème, dans lequel le procédé comporte par ailleurs les étapes consistant à :
avant de sélectionner le répondeur, évaluer (435), au moyen du système de réponse, la précision de la réponse finale, dans lequel la précision est évaluée sur la base d'une comparaison entre la réponse finale et une réponse de vérité terrain que l'utilisateur préférerait pour le problème, et la précision de la réponse finale est déterminée comme étant acceptable quand la réponse finale s'aligne sur la réponse de vérité terrain sur la base de la comparaison ou est déterminée comme étant inacceptable quand la réponse finale ne s'aligne pas sur la réponse de vérité terrain sur la base de la comparaison ;
en réponse à la précision qui est déterminée comme étant inacceptable :
générer (440) une étiquette pour le problème, dans lequel l'étiquette comporte la réponse de vérité terrain ;
stocker (440) l'étiquette comportant la vérité terrain et le problème dans une mémoire de données locale ; et
sélectionner (475) le répondeur dans l'ensemble de répondeurs sur la base de la vérité terrain plutôt que de la réponse finale ; et
en réponse à la précision qui est déterminée comme étant acceptable :
générer (460) une étiquette pour le problème, dans lequel l'étiquette comporte la réponse finale ;
stocker (460) l'étiquette comportant la réponse finale et le problème dans la mémoire de données locale et dans la mémoire de données globale ; et
sélectionner (475) le répondeur dans l'ensemble de répondeurs sur la base de la réponse finale.

2. Procédé selon la revendication 1, comportant par ailleurs les étapes consistant à :
en réponse à la précision qui est déterminée comme étant inacceptable :
stocker l'étiquette comportant la vérité terrain et le problème dans une mémoire de données générales ou placer l'étiquette comportant la vérité terrain et le problème dans une file d'attente de données à des fins d'évaluation par un administrateur ;
recevoir une réponse de l'administrateur soit pour ne prendre aucune mesure concernant l'étiquette comportant la vérité terrain et le problème, soit pour entraîner le modèle global au moyen de l'étiquette comportant la vérité terrain et le problème ;
à la suite de la réponse qui consiste à ne prendre aucune mesure, retirer l'étiquette comportant la vérité terrain et le problème de la mémoire de données ou de la file d'attente de données ; et
à la suite de la réponse qui consiste à entraîner le modèle global, stocker l'étiquette comportant la vérité terrain et le problème dans le référentiel global.

3. Procédé selon la revendication 1, comportant par ailleurs les étapes consistant à :
entraîner le modèle global avec des données d'apprentissage globales provenant du référentiel global, dans lequel les données d'apprentissage globales comprennent l'étiquette comportant la réponse finale et le problème ; et
entraîner le modèle local avec des données d'apprentissage locales provenant du référentiel local, dans lequel les données d'apprentissage locales comprennent l'étiquette comportant la réponse finale et le problème.

4. Procédé selon la revendication 1, comportant par ailleurs l'étape consistant à entraîner le modèle local avec des données d'apprentissage locales provenant du référentiel local, dans lequel les données d'apprentissage locales comprennent l'étiquette comportant la réponse de vérité terrain et le problème.

5. Procédé selon la revendication 2, comportant par ailleurs les étapes consistant à :
entraîner le modèle global avec des données d'apprentissage globales provenant du référentiel global, dans lequel les données d'apprentissage globales comprennent l'étiquette comportant la réponse de vérité terrain et le problème ; et
entraîner le modèle local avec des données d'apprentissage locales provenant du référentiel local, dans lequel les données d'apprentissage locales comprennent l'étiquette comportant la réponse de vérité terrain et le problème.

6. Procédé selon la revendication 1, comportant par ailleurs l'étape consistant à prendre, par le système de réponse, lesdites une ou plusieurs mesures pour répondre au problème.

7. Mémoire non transitoire lisible par ordinateur (922) stockant une pluralité d'instructions en mesure d'être exécutées par un ou plusieurs processeurs (904), la pluralité d'instructions comportant des instructions qui, quand elles sont exécutées par lesdits un ou plusieurs processeurs (904), amènent lesdits un ou plusieurs processeurs (904) à effectuer un traitement comportant les étapes consistant à :
obtenir (305), par un système de réponse d'une architecture de sécurité, un problème détecté dans un signal en provenance d'un émetteur associé à un utilisateur, dans laquelle le problème est un incident de sécurité ;
déduire (310) une première réponse, au moyen d'un modèle global mis en œuvre comme faisant partie du système de réponse qui prend comme entrée le problème, dans laquelle le modèle global comporte un ensemble global de paramètres de modèle appris à partir de mappages entre des problèmes et des réponses globalement par rapport aux préférences de tous les utilisateurs qui utilisent l'architecture de sécurité ;
déduire (315) une deuxième réponse, au moyen d'un modèle local mis en œuvre comme faisant partie du système de réponse qui prend comme entrée le problème, dans laquelle le modèle local comporte un ensemble local de paramètres de modèle appris à partir de mappages entre des problèmes et des réponses localement par rapport aux préférences de l'utilisateur ;
évaluer (325), par le système de réponse, la première réponse et la deuxième réponse au moyen de critères comportant : (i) une note de confiance associée à chacune parmi la première réponse et la deuxième réponse, et (ii) une valeur de pondération associée à chacun parmi le modèle global et le modèle local ;
déterminer (330), par le système de réponse, une réponse finale pour le problème sur la base de l'évaluation de la première réponse et de la deuxième réponse ; et
sélectionner (335), par le système de réponse, un répondeur parmi un ensemble de répondeurs sur la base de la réponse finale, dans laquelle le répondeur est adapté pour prendre une ou plusieurs mesures pour répondre au problème,
dans laquelle le traitement comporte par ailleurs les étapes consistant à :
avant de sélectionner le répondeur, évaluer (425), au moyen du système de réponse, la précision de la réponse finale, dans laquelle la précision est évaluée sur la base d'une comparaison entre la réponse finale et une réponse de vérité terrain que l'utilisateur préférerait pour le problème, et la précision de la réponse finale est déterminée comme étant acceptable quand la réponse finale s'aligne sur la réponse de vérité terrain sur la base de la comparaison ou est déterminée comme étant inacceptable quand la réponse finale ne s'aligne pas sur la réponse de vérité terrain sur la base de la comparaison ;
en réponse à la précision qui est déterminée comme étant inacceptable :
générer (440) une étiquette pour le problème, dans laquelle l'étiquette comporte la réponse de vérité terrain ;
stocker (440) l'étiquette comportant la vérité terrain et le problème dans une mémoire de données locale ; et
sélectionner (475) le répondeur dans l'ensemble de répondeurs sur la base de la vérité terrain plutôt que de la réponse finale ; et
en réponse à la précision qui est déterminée comme étant acceptable :
générer (460) une étiquette pour le problème, dans laquelle l'étiquette comporte la réponse finale ;
stocker (460) l'étiquette comportant la réponse finale et le problème dans la mémoire de données locale et dans la mémoire de données globale ; et
sélectionner (475) le répondeur dans l'ensemble de répondeurs sur la base de la réponse finale.

8. Mémoire non transitoire lisible par ordinateur selon la revendication 7, dans laquelle le traitement comporte par ailleurs les étapes consistant à :
en réponse à la précision qui est déterminée comme étant inacceptable :
stocker l'étiquette comportant la vérité terrain et le problème dans une mémoire de données générales ou placer l'étiquette comportant la vérité terrain et le problème dans une file d'attente de données à des fins d'évaluation par un administrateur ;
recevoir une réponse de l'administrateur soit pour ne prendre aucune mesure concernant l'étiquette comportant la vérité terrain et le problème, soit pour entraîner le modèle global au moyen de l'étiquette comportant la vérité terrain et le problème ;
à la suite de la réponse qui consiste à ne prendre aucune mesure, retirer l'étiquette comportant la vérité terrain et le problème de la mémoire de données ou de la file d'attente de données ; et
à la suite de la réponse qui consiste à entraîner le modèle global, stocker l'étiquette comportant la vérité terrain et le problème dans le référentiel global.

9. Mémoire non transitoire lisible par ordinateur selon la revendication 7, dans laquelle le traitement comporte par ailleurs les étapes consistant à :
entraîner le modèle global avec des données d'apprentissage globales provenant du référentiel global, dans laquelle les données d'apprentissage globales comprennent l'étiquette comportant la réponse finale et le problème ; et
entraîner le modèle local avec des données d'apprentissage locales provenant du référentiel local, dans laquelle les données d'apprentissage locales comprennent l'étiquette comportant la réponse finale et le problème.

10. Mémoire non transitoire lisible par ordinateur selon la revendication 7, dans laquelle le traitement comporte par ailleurs l'étape consistant à entraîner le modèle local avec des données d'apprentissage locales provenant du référentiel local, dans laquelle les données d'apprentissage locales comprennent l'étiquette comportant la réponse de vérité terrain et le problème.

11. Mémoire non transitoire lisible par ordinateur selon la revendication 8, dans laquelle le traitement comporte par ailleurs les étapes consistant à :
entraîner le modèle global avec des données d'apprentissage globales provenant du référentiel global, dans laquelle les données d'apprentissage globales comprennent l'étiquette comportant la réponse de vérité terrain et le problème ; et
entraîner le modèle local avec des données d'apprentissage locales provenant du référentiel local, dans laquelle les données d'apprentissage locales comprennent l'étiquette comportant la réponse de vérité terrain et le problème.

12. Mémoire non transitoire lisible par ordinateur selon la revendication 7, dans laquelle le traitement comporte par ailleurs l'étape consistant à prendre, par le système de réponse, lesdites une ou plusieurs mesures pour répondre au problème.

13. Système comportant :
un ou plusieurs processeurs (904) ; et
une mémoire (910) couplée auxdits un ou plusieurs processeurs (904), la mémoire (910) stockant une pluralité d'instructions en mesure d'être exécutées par lesdits un ou plusieurs processeurs (904), la pluralité d'instructions comportant des instructions qui, quand elles sont exécutées par lesdits un ou plusieurs processeurs (904), amènent lesdits un ou plusieurs processeurs (904) à effectuer le procédé selon l'une quelconque des revendications 1 à 6.
